# EUROPÄISCHE PATENTSCHRIFT

(11) **EP 0 987 532 B1**
(45) Veröffentlichungstag und Bekanntmachung des Hinweises auf die Patenterteilung: **02.07.2008**
(21) Anmeldenummer: 99116864.2
(22) Anmeldetag: 03.09.1999
(51) Int. Cl.: G01L 5/24, G01L 3/14

(54) **Messvorrichtung zur Bestimmung des Gesamtanzugsmoments, des Kopfreibungsmoments und der Vorspannkraft einer angezogenen Schraubverbindung**
Measuring device for determining the overall starting torque, the friction moment of a screw head and the pre-stressing force of a tightened screw connection
Dispositif de mesure pour la détermination du couple de serrage total, du moment de friction d'une tête de vis et de la force de précontrainte d'une connexion à vis serrée

(30) Priorität: 15.09.1998 DE 19842231
(43) Veröffentlichungstag der Anmeldung: 22.03.2000
(73) Patentinhaber: TesT GmbH, 40699 Erkrath (DE)
(72) Erfinder: Hunsche, Axel, 44287 Dortmund (DE)
(74) Vertreter: Kahlhöfer, Hermann

(56) Entgegenhaltungen:
- DE-A- 3 408 310
- DE-B- 2 352 749
- DE-B- 2 521 428
- US-A- 5 339 696

## Beschreibung

Die Erfindung betrifft eine Meßvorrichtung zur Bestimmung des Gesamtanzugsmoments M_{A}, des Kopfreibungsmoments M_{K} und der Vorspannkraft Fᵥ einer angezogenen und in einem Kraft/Moment-Aufnehmer gehalterten Schraubverbindung durch Messung resultierender Spannungen gemäß dem Oberbegriff des Anspruchs 1.

Bekannt ist aus der Fachliteratur, beispielsweise aus Dubbel, Taschenbuch für den Maschinenbau, 14. Aufl. 1981, S. 374 ff., daß das wesentliche Merkmal einer Schraubverbindung, welche beispielsweise zwei Bauteile wie Platten oder Flansche verspannt, das ineinandergreifende Gewinde eines Schraubenbolzens mit dem Innengewinde einer Mutter bzw. eines Bauteils ist. Die Drehung wenigstens eines der Teile führt zu deren Verschiebung relativ zueinander entlang einer gemeinsamen Achse, der Schraubenachse. Die relative Längsbewegung und die relative Drehbewegung eines Teiles (z. B. der Mutter) gegenüber einem anderen Teil (z. B. dem Schraubenbolzen) sind einander proportional. Wird durch Weiterdrehen die Schraubverbindung angezogen, dann entsteht im Schraubenbolzen eine Zugkraft (Zugspannung), die mitunter auch als Vorspannkraft bezeichnet wird, und eine gleich hohe Druckkraft (Druckspannung) zwischen den Bauteilen. Dadurch längt sich der Schraubenbolzen etwas und die Platten werden in einem durch den sog. "Rötscher-Kegel" begrenzten Bereich zusammengepreßt. Man spricht von einer elastischen Nachgiebigkeit in der Schraubverbindung.

Beim Drehen der Teile muß ein mit der Zugkraft Fv steigendes Gewindereibungsmoment M_{G} und ein Kopfreibungsmoment M_{K} überwunden werden. Das Gewindereibungsmoment M_{G} resultiert aus den formschlüssig gegeneinander gleitenden Wirkflächen, den sog. Schraubenflächen (meist Regelflächen) der beiden Teile. Das Kopfreibungsmoment M_{K} resultiert aus der Reibung der aufeinandergleitenden Flächen unter der Mutter bzw. unter dem Schraubenkopf, je nachdem, welches Teil beim Anziehen der Schraubverbindung gedreht wird. Das gesamte, beim Anziehen der Schraubverbindung aufgebrachte Anzugsmoment M_{A} setzt sich additiv aus den Reibungsmomenten M_{G} und M_{K} zusammen und ist damit abhängig von Vorspannkraft Fv und Reibungszahlen, wobei letztere natürlich werkstoffabhängig sind.

Eine Berechnung des häufig nicht direkt meßbaren Gewindereibungsmomentes M_{G} bereitet insofern Schwierigkeiten, als daß teilweise die meßbaren Parameter, nämlich M_{A}, M_{K} und Fv, insbesondere jedoch das Kopfreibungsmoment M_{K}, mittels bekannter Meßvorrichtungen nicht hinreichend genau ermittelbar sind. Damit ist eine gesicherte Aussage über Qualität und Zuverlässigkeit einer Schraubverbindung erschwert, was insbesondere in der Automobilindustrie, die nach internationalen Normen und Hausnormen arbeitet, hinderlich ist.

Ein Meßgerät zur Bestimmung des Gesamtanzugsmoments M_{A}, des Kopfreibungsmoments M_{K} und der Vorspannkraft Fv ist beispielsweise aus der DE 25 21 428 C2 bekannt. Das Meßgerät besteht aus einem im wesentlichen zylindrischen Gehäuse mit einer parallel zur Zylinderachse des Gehäuses orientierten unteren Grundplatte. An einem ersten Ende weist das Gehäuse einen mit einer Innenschulter versehenen Innenflansch auf. An der Innenschulter ist der Außenring eines Kugellagers befestigt. Am gegenüberliegenden zweiten Ende des Gehäuses ist ein einen Innenflansch darstellender Stahlring angeschraubt, der in einer oberen Ausnehmung den Außenring eines weiteren Kugellagers aufnimmt, der mit einem angeformten, ringförmigen Abschnitt in das Gehäuse hineinragt. Eine Einspannhülse ist nahe ihrer beiden Stirnenden über die Kugellager und reibungsarm im Gehäuse drehbar gelagert, wobei sie jedoch über zwei diametral vom Umfang der Einspannhülse abragende, biegeelastische Arme am gehäusefesten Stahlring gefesselt ist. Die Arme weisen an ihrem der Einspannhülse benachbarten Ende eine Querschnittsverminderung auf. Die freien Enden der Arme sind jeweils über einen zylindrischen Stift an den Ring angelenkt. Bei einer Verdrehung der Einspannhülse aufgrund des Anziehens der Schraubverbindung innerhalb des Stahlringes können die Arme um die als Gelenkachsen wirkenden Stifte reibungsarm schwenken.

Die zu prüfende Schraubverbindung wird über Einsatzstücke in die Einspannhülse, welche in ihrem mittleren Bereich als verhältnismäßig dünnwandige Torsionszelle ausgebildet ist, eingespannt. Im als Torsionszelle ausgebildeten Bereich der Einspannhülse werden mittels wenigstens zweier, außen angebrachter Sätze von Dehnungsmeßstreifen die vom Kopfreibungsmoment M_{K} abhängige Torsionsspannung und die von der axialen Vorspannkraft Fv abhängige Druckspannung in der Einspannhülse gemessen, deren Betrag der interessierenden Zugspannung in der Schraubverbindung entspricht. Das gesamte beim Anziehen der Schraubverbindung aufgebrachte Anzugsmoment M_{A} tritt als Biegespannung im Bereich der biegeelastischen Arme auf und wird durch zusätzlich in den Querschnittsverminderungen der Arme angeordneten Dehnungsmeßstreifen erfaßt. Das Gewindereibungsmoment M_{G} läßt sich aus der Differenz des Gesamtanzugsmomentes M_{A} und des Kopfreibungsmomentes M_{K} berechnen.
Während des Anziehens der Schraubverbindung tritt eine Verformung der Einspannhülse auf. Die Gesamtverformung der Einspannhülse besteht aus einer reinen Stauchung (Druckspannung) und einer reinen Scherung (Torsionsspannung), welche durch folgende Winkelbedingungen beschrieben werden können: Die Stauchung (Druckspannung) kann durch zwei unter 90° zueinander gelegene Dehnungsmeßstreifen, wobei einer parallel und der andere quer zur Längsachse der Einspannhülse angeordnet ist, vollständig erfaßt werden. Die Scherung (Torsionsspannung) kann durch zwei unter 90° zueinander gelegene und zur Längsachse der Einspannhülse um 45° geneigte Dehnungsmeßstreifen vollständig erfaßt werden. Die Einspannhülse ist entlang ihrer Längsachse durch die Vorspannkraft Fᵥ gestaucht und senkrecht dazu durch M_{K}/R geschert, wobei R der Radius der Einspannhülse ist, der als groß gegenüber ihrer Wandstärke D angenommen wird.

Die vom Kopfreibungsmoment M_{K} abhängige Torsionspannung hat keine weitere Stauchung (Druckspannung) entlang der Längsachse der Einspannhülse zur Folge. Ebenso führt die axiale Stauchung (Druckspannung) nicht zu einer weiteren Scherung (Torsionsspannung).

Allerdings findet ein sogenanntes Übersprechen (Störgröße) der einen Meßgröße in die andere und umgekehrt statt. Insbesondere sind die auf der letzlich wie eine Feder wirkenden torsions- und druckelastischen Einspannhülse aufgebrachten Sätze von Dehnungsmeßstreifen sowohl der vom Kopfreibungsmoment M_{K} abhängigen Torsionsspannung als auch der von der axialen Vorspannkraft Fv abhängigen Druckspannung ausgesetzt. Da die zuvor beschriebenen Winkelbedingungen, insbesondere bei der Anbringung der Dehnungsmeßstreifen, nicht immer zuverlässig eingehalten werden können, erfassen die Dehnungsmeßstreifen beispielsweise für die vom Kopfreibungsmoment M_{K} abhängige Torsionsspannung einen kleinen Anteil der von der axialen Vorspannkraft Fv abhängigen Druckspannung ebenso mit wie umgekehrt.

Maßgeblich für die Stauchung (Druckspannung) der Einspannhülse und die Längung (Zugspannung) des Schraubenbolzens unter der Vorspannkraft Fv sind ihre tragenden Querschnitte und die Elastizitätsmoduln ihrer Werkstoffe. Der Elastizitätsmodul des Schraubenbolzens ist in der Regel derselbe wie der der Einspannhülse; beide bestehen vorzugsweise aus Stahl. Der tragende Querschnitt der Einspannhülse ist möglichst klein gewählt im Interesse einer gut meßbaren, großen Stauchung (Druckspannung). Der tragende Querschnitt des Schraubenbolzens ist im Interesse der Materialersparnis ebenfalls klein. Die Untergrenze der tragenden Querschnitte wird festgelegt durch die Forderung, daß keine bleibende Verformung im Betrieb auftreten darf Diese Forderung gilt für Einspannhülse und Schraubverbindung gleichermaßen. Daher sind die die Vorspannkraft Fv tragenden Querschnitte beim Schraubenbolzen und bei der Einspannhülse im wesentlichen gleich groß.

Anders ist die Situation bei der Torsionsverformung. Zwar sind auch hier die elastischen Werkstoffkennwerte, nämlich die Schubmoduln, identisch. Außerdem ist der Schraubenbolzen so ausgelegt, daß annähernd die maximal zulässige Torsionsverformung auftritt. Maßgeblich für die Torsionsverformung ist jedoch, neben dem Schubmodul und dem Betrag des tragenden Querschnitts, dessen Radius in bezug auf die Drehachse, d. h. die Schraubenachse bzw. Längsachse der Einspannhülse, und dieser ist bei der Einspannhülse zwangsläufig erheblich größer als bei dem Schraubenbolzen, da erstere den letzteren koaxial umschließt. Daher ist bei der Einspannhülse die Torsionsverformung erheblich kleiner als im Schraubenbolzen. Ein elektrisches Ausgangssignal (Nutzgröße) des zugehörigen Dehnungsmeßstreifens ist folglich deutlich kleiner als das für die Stauchung (Druckspannung), oder anders ausgedrückt, deutlich empfindlicher gegenüber dem Übersprechen (Störgröße) anderer Meßgrößen. So beträgt beispielsweise nach der DE 25 21 428 C2 das Verhältnis der Meßsignale (Nutzgrößen) für die vom Kopfreibüngsmoment M_{K} abhängige Torsionsspahnung etwa nur 1/5 bis 1/3 desjenigen für die von der Vorspannkraft Fᵥ abhängige Druckspannung. Durch die relativ kleine Torsionsverformung, die zu einem kleinen Meßsignal (Nutzgröße) für die vom Kopfreibungsmoment M_{K} abhängige Torsionsspannung führt, und die gleichzeitig anliegende axiale Vorspannkraft Fv, die in einer großen Stauchung (Druckspannung) resultiert, erfolgt durch das Übersprechen (Störgröße) der Meßgrößen eine gravierende Verfälschung des Meßsignals (Nutzgröße) der Meßstelle für die vom Kopfreibungsmoment M_{K} abhängige Torsionsspannung.

Umgekehrt ist allerdings aufgrund der geschilderten Verhältnisse eine Verfälschung der Meßgröße (Nutzgröße) für die von der Vorspannkraft Fv abhängige Druckspannung durch Übersprechen (Störgröße) der vom Kopfreibungsmoment M_{K} abhängigen Torsionsspannung in die Meßstelle für die Vorspannkraft Fv sehr gering und ohne Bedeutung.

DE -A-34 08 310 offenbart eine Vorrichtung zum getrennten Messen der Teildrehmomente an einer Schraubverbindung mit einer drehbar gelagerten Hülse zur Aufnahme eines kopfreibungsmomentes. Bei den Messvorrichtungen nach DE-A-2352749, US-A-5339696 und DE-A-2521428 werden nicht alle Teildrehmomente unabhängig voneinander gemessen.

Es ist Aufgabe der Erfindung, eine Meßvorrichtung der eingangs genannten Art derart weiterzubilden, daß insbesondere das Kopfreibungsmoment M_{K} bzw. die davon abhängige Torsionsspannung mit einer erhöhten Meßgenauigkeit bestimmbar ist.

Diese Aufgabe wird durch die Merkmale des Anspruchs 1 gelöst. Vorteilhafte Weiterbildungen der Erfindung werden in den abhängigen Unteransprüchen angegeben.

Die erfindungsgemäße Meßvorrichtung zur Bestimmung des Gesamtanzugsmoments M_{A}, des Kopfreibungsmoments M_{K} und der Vorspannkraft Fv einer angezogenen und in einem Kraft/Moment-Aufnehmer gehalterten Schraubverbindung durch Messung resultierender Spannungen, insbesondere:
- einer vom Gesamtanzugsmoment M_{A} abhängigen Biegespannung über wenigstens eine Meßstelle;
- einer vom Kopfreibungsmoment M_{K} abhängigen Torsionsspannung bzw. Biegespannung über wenigstens eine Meßstelle; sowie
- einer von der axialen Vorspannkraft Fv abhängigen Druckspannung über wenigstens eine Meßstelle;
mittels Dehnungsmeßstreifen, die am Kraft/Moment-Aumehmer so angeordnet sind, daß sie zumindest jeweils eine der Meßstellen zur Bestimmung der von M_{A}, M_{K} oder Fv abhängigen Spannungen bilden, wobei die Messvorrichtung eine torsions-und druckelastische Einspannhülse aufweist, zeichnet sich dadurch aus, daß die Meßstelle für die vom Kopfreibungsmoment M_{K} abhängige Torsionsspannung bzw. Biegespannung durch mechanische Mittel von einem Einfluß der von der axialen Vorspannkraft Fv abhängigen Druckspannung entkoppelt list.

Durch das Vorsehen von Mitteln zur mechanischen Entkopplung wird in vorteilhafter Weise ein Übersprechen (Störgröße) einer Meßgröße in die Meßstelle der jeweils anderen Meßgröße weitestgehend verhindert und eine erhöhte Meßgenauigkeit, insbesondere für das Kopfreibungsmoment M_{K}, erzielt, so daß einerseits das Gewindereibungsmoment M_{G} genauer bestimmbar und dadurch eine besser gesicherte Aussage über Qualität und Zuverlässigkeit einer Schraubverbindung ermöglicht und andererseits die Schraubverbindung so auslegbar ist, daß Risiken hinsichtlich einer Lockerung bzw. eines Lösens der Schraubverbindung unter Betriebslast besser auszuschließen sind. Das Einsatzgebiet der Erfindung erstreckt sich hierbei nicht nur auf die Qualitätssicherung, sondern auch z.B. auf Wareneingangskontrolle und Forschung und Entwicklung, vorzugsweise in der Automobilindustrie.

Erfindungsgemäß bevorzugt zeichnet sich ein Kraft/Moment-Aufnehmer, welcher eine torsions- und druckelastische zylindrische zentrale Einspannhülse aufweist, auf der wenigstens eine Meßstelle für die vom Kopfreibungsmoment M_{K} abhängige Torsionsspannung und wenigstens eine Meßstelle für die von der axialen Vorspannkraft Fv abhängige Druckspannung angeordnet ist, dadurch aus, daß die Mittel zur Entkopplung der Meßstelle für die vom Kopfreibungsmoment M_{K} abhängige Torsionsspannung wenigstens teilweise die Druckspannungen in der Einspannhülse aufheben beziehungsweise die Torsionsspannungen kanalisieren.

Zur Entkopplung der Meßstelle für die vom Kopfreibungsmoment M_{K} abhängige Torsionsspannung wird beispielsweise vorgeschlagen, daß wenigstens ein benachbart zu dieser in der zentralen Einspannhülse eingebrachter und sich zu deren Längsachse quer, vorzugsweise etwa rechtwinklig, erstrekender Entlastungsschlitz vorgesehen ist, welcher in vorteilhafter Weise wenigstens teilweise die Druckspannungen in der Einspannhülse aufhebt.

Die Entkopplung kann vorzugsweise dadurch verstärkt werden, daß zusätzlich zum Entlastungsschlitz wenigstens eine, benachbart zur entkoppelten Meßstelle für die vom Kopfreibungsmoment M_{K} abhängige Torsionsspannung in der zentralen Einspannhülse eingebrachte und sich zu deren Längsachse in etwa parallel erstreckende im wesentlichen rechteckförmige Entlastungsausnehmung vorgesehen ist.

Eine weitere Steigerung der Entkopplungswirkungen wird vorzugsweise dadurch erreicht, daß ein zweiter Entlastungsschlitz benachbart zur Meßstelle für die vom Kopfreibungsmoment M_{K} abhängige Torsionsspannung vorgesehen ist, welcher im wesentlichen parallel zum ersten Entlastungsschlitz angeordnet ist, wobei wie bei Längsseiten eines Rechteckes die Länge der Entlastungsschlitze größer als ihr Abstand voneinander ist, vorzugsweise wenigstens eineinhalb mal so groß, insbesondere doppelt so groß, so daß zwischen den Entlastungsschlitzen ein stegförmiger Abschnitt ausgebildet ist.

Zur Vergrößerung der Torsionsverformung im Bereich der Meßstelle für die vom Kopfreibungsmoment M_{K} abhängige Torsionsspannung wird vorgeschlagen, daß der stegförmige Abschnitt eine geringere Wandstärke bzw. Materialdicke d aufweist als die übrige Wandstärke D der zentralen Einspannhülse.

Zur gezielten Übertragung bzw. Einleitung der Torsionsspannung in den stegförmigen Abschnitt wird vorgeschlagen, daß wenigstens ein Entlastungsschlitz und wenigstens eine Entlastungsausnehmung, vorzugsweise zwei sich gegenüberliegende Entlastungsausnehmungen, in etwa rechtwinklig so zueinander berührungsfrei angeordnet sind, daß dazwischen eine schmale Zunge, vorzugsweise zwei schmale Zungen, ausgebildet sind, die den stegförmigen Abschnitt mit der übrigen Einspannhülse verbinden, wobei die schmalen bzw. dünnen Zungen in vorteilhafter Weise durch die Entlastungsausnehmungen von den Einflüssen einer von der Vorspannkraft F_{V} abhängigen Druckspannung maximal befreit sind.

In einer einfachsten Ausführungsform sind die der Meßstelle für die vom Kopfreibungsmoment M_{K} abhängige Torsionsspannung zugewandten Seiten der Entlastungsausnehmungen vorzugsweise als Gerade ausgebildet.

Zur Vergrößerung der Torsionsverformung im Bereich der Meßstelle für die vom Kopfreibungsmoment M_{K} abhängige Torsionsspannung ggf. unter Beibehaltung der Materialdicke D wird vorgeschlagen, daß die der Meßstelle für die vom Kopfreibungsmoment M_{K} abhängige Torsionsspannung zugewandten Seiten der Entlastungsausnehmungen so erweitert ausgebildet sind, daß der stegförmige Abschnitt wenigstens im Bereich der Meßstelle für die vom Kopfreibungsmoment M_{K} abhängige Torsionsspannung eine lokale Einschnürung aufweist, wobei vorzugsweise die seitliche Erweiterung der Entlastungsausnehmungen im mittleren Bereich der der Meßstelle für die vom Kopfreibungsmoment M_{K} abhängige Torsionsspannung zugewandten Seiten der Entlastungsausnehmungen ausgebildet und kreissegmentförmig oder dreieckförmig oder einer sonstigen geometrischen Form nachgebildet ist.

Erfindungsgemäß bevorzugt sind auf der zentralen Einspannhülse die Meßstelle zur Ermittlung einer von der Vorspannkraft F_{V} abhängigen Druckspannung und die hiervon mechanisch entkoppelte Meßstelle zur Ermittlung einer vom Kopfreibungsmoment M_{K} abhängigen Torsionsspannung wechselnd und gleichmäßig voneinander beabstandet, vorzugsweise jeweils zwei paar Meßstellen wechselnd und unter einem Winkel von 90° zueinander, angeordnet.

Eine alternative Formgebung eines Kraft/Moment-Aufnehmers mit einer torsions-und druckelastischen zylindrischen zentralen Einspannhülse, auf der lediglich die Meßstellen für die von der axialen Vorspannkraft Fv abhängige Druckspannung angeordnet sind, zeichnet sich erfindungsgemäß bevorzugt dadurch aus, daß die Meßstellen für die vom Kopfreibungsmoment M_{K} abhängige Torsionsspannung auf einer äußeren Hülse, welche die zentrale Einspannhülse koaxial umschließt, angeordnet sind, die über Mittel zur zusätzlichen mechanischen Entkopplung der Meßstellen für die vom Kopfreibungsmoment M_{K} abhängige Torsionsspannung von der von der axialen Vorspannkraft Fv abhängigen Druckspannung mit der zentralen Einspannhülse insbesondere spielfrei verbunden ist, wobei die Mittel in vorteilhafter Weise druckelastisch und torsionssteif sind.

Zur mechanischen Entkopplung wenigstens einer auf der äußeren Hülse angeordneten Meßstelle für die vom Kopfreibungsmoment M_{K} abhängige Torsionsspannung und der zentralen Einspannhülse, an der die Kräfte und Momente primär angreifen, und die an ihrem einen Stirnende einen ersten, vorzugsweise zylindrischen, Flansch und am gegenüberliegenden Stirnende einen zweiten, vorzugsweise rechteckförmigen, Flansch aufweist, ist erfindungsgemäß bevorzugt zwischen der äußeren Hülse und der zentralen Einspannhülse wenigstens eine druckelastische torsionssteife kreisförmige Membrane angeordnet.

Zur druckelastischen und torsionssteifen Halterung der äußeren Hülse an der zentralen Einspannhülse wird vorgeschlagen, daß die äußere Hülse ein beidseitig offener Zylinder ist, dessen beide Enden jeweils einen Innenflansch aufweisen, wobei zwischen sich gegenüberliegenden Flanschen von zentraler Einspannhülse und äußerer Hülse jeweils eine kreisförmige Membrane angeordnet ist.

Alternativ hierzu weist die äußere Hülse eine vorzugsweise topfartige Form auf, mit einem benachbart zur Außenkante ihrer offenen Seite angeformten Innenflansch und einer kreisförmigen Bodenplatte mit einem Loch, durch das sich die zentrale Einspannhülse hindurch erstreckt, so daß bodenseitig die äußere Hülse über die Bodenplatte am zweiten, vorzugsweise rechteckförmigen, Flansch der zentralen Einspannhülse und an ihrer offenen Seite über eine zwischen den sich gegenüberliegenden Flanschen von zentraler Einspannhülse und äußerer Hülse angeordnete kreisförmige Membrane druckelastisch und torsionssteif gehaltert ist.

Zur Mimimierung eines Übersprechens der von der Vorspannkraft Fv abhängigen Druckspannung in eine Meßstelle für die vom Kopfreibungsmoment M_{K} abhängige Torsionsspannung wird vorgeschlagen, daß die kreisförmige Membrane wenigstens eine umlaufende Sicke aufweist.

Alternativ zu einer Membrane wird vorgeschlagen, daß zur mechanischen Entkopplung der Meßstelle für die vom Kopfreibungsmoment M_{K} abhängige Torsionsspannung zwischen der äußeren Hülse und der zentralen Einspannhülse wenigstens ein druckelastischer torsionssteifer Balg oder Kompensator vorgesehen ist, welcher vorzugsweise zwischen dem ersten, vorzugsweise zylindrischen, Flansch und der auf der äußeren Hülse angeordneten Meßstelle für die vom Kopfreibungsmoment M_{K} abhängige Torsionsspannung angeordnet ist.

Alternativ zur einer Membrane oder einem ersten Balg bzw. Kompensator wird vorgeschlagen, daß ein zweiter druckelastischer torsionssteifer Balg oder Kompensator vorgesehen ist, der vorzugsweise zwischen der Meßstelle für die vom Kopfreibungsmoment M_{K} abhängige Torsionsspannung und einer mit dem zweiten, vorzugsweise rechteckförmigen, Flansch verbundenen kreisförmigen Platte angeordnet ist.

Zur Mimimierung eines Übersprechens der von der Vorspannkraft Fv abhängigen Druckspannung in eine Meßstelle für die vom Kopfreibungsmoment M_{K} abhängige Torsionsspannung wird vorgeschlagen, daß der oder die Bälge oder Kompensatoren wenigstens eine umlaufende Welle aufweisen.

Äußere Hülse, Membran, Balg bzw. Kompensator und/oder zentrale Einspannhülse sind vorzugsweise durch bekannte Verbindungstechniken, insbesondere durch Verschrauben und/oder Verschweißen, miteinander starr bzw. spielfrei verbindbar.

Eine weitere mechanische Entkopplung der Meßstelle für die vom Kopfreibungsmoment M_{K} abhängige Torsionsspannung von der von der axialen Vorspannkraft F_{V} abhängige Druckspannung erfolgt erfindungsgemäß bevorzugt durch geeignete Wahl einer geometrischen Anordnung der Meßstelle für die vom Kopfreibungsmoment M_{K} abhängige Torsionsspannung auf der äußeren Hülse, insbesondere durch Wahl einer Länge L des Meßstellenbereiches für die vom Kopfreibungsmoment M_{K} abhängige Torsionsspannung auf der äußeren Hülse, eines Radius R der äußeren Hülse, und einer Stärke d der äußeren Hülse (17) im Bereich der Meßstelle für die vom Kopfreibungsmoment M_{K} abhängige Torsionsspannung, wobei zur Vergrößerung einer Torsionsverformung die Wandstärke d der äußeren Hülse im Bereich der Meßstelle für die vom Kopfreibungsmoment M_{K} abhängige Torsionsspannung vorzugsweise geringer ist als die übrige Wandstärke D der äußeren Hülse.

Zur Erhöhung der Meßempfindlichkeit der auf der äußeren Hülse angeordneten Meßstellen für die vom Kopfreibungsmoment M_{K} abhängige Torsionsspannung wird vorgeschlagen, daß die äußere Hülse zusätzlich radiale Bohrungen aufweist.

Alternativ und/oder kumulativ wird vorgeschlagen, daß benachbart zu der auf der äußeren Hülse angeordneten Meßstelle wenigstens ein Entlastungsschlitz und/oder wenigstens eine Entlastungsausnehmung analog einer der Ansprüche 3 bis 10 vorgesehen ist.

Erfindungsgemäß bevorzugt sind die Meßstellen zur Ermittlung einer von der Vorspannkraft Fv abhängigen Druckspannung auf der zentralen Einspannhülse und die hiervon mechanisch entkoppelte Meßstelle zur Ermittlung einer vom Kopfreibungsmoment M_{K} abhängigen Torsionsspannung auf der äußeren Hülse relativ zueinander wechselnd, vorzugsweise paarweise wechselnd, d.h. vorzugsweise jeweils zwei Paar Meßstellen wechselnd und unter einem Winkel von 90° relativ zueinander, angeordnet.

Zur Plazierung von geeigneten Dehnungsmeßstreifen in die Meßstellen für eine von der Vorspannkraft Fv abhängige Druckspannung wird vorgeschlagen, daß die äußere Hülse jeweils über den auf der zentralen Einspannhülse angeordneten Meßstellen für die von der Vorspannkraft Fv abhängige Druckspannung eine Ausnehmung aufweist, die in ihren Maßen jedenfalls so bemessen ist, daß die Dehnungsmeßstreifen auf der zentralen Einspannhülse plaziert werden können und dennoch eine Weiterleitung bzw. Einleitung der vom Kopfreibungsmoment M_{K} abhängigen Torsionsspannung in die dafür vorgesehene Meßstelle auf der äußeren Hülse gewährleistet ist.

Ein erfindungsgemäß bevorzugter alternativer Kraft/Moment-Aufnehmer mit einer torsions- und druckelastischen zylindrischen zentralen Einspannhülse, auf der lediglich die Meßstellen für die von der axialen Vorspannkraft Fv abhängige Druckspannung angeordnet sind, wobei die zentrale Einspannhülse an ihrem einen Stirnende einen ersten, vorzugsweise zylindrischen, Flansch und am gegenüberliegenden Stirnende einen zweiten, vorzugsweise rechteckförmigen Flansch aufweist, zeichnet sich in vorteilhafter Weise dadurch aus, daß am zweiten Flansch zwei diametral angeordnete Verbindungsarme einstückig angeformt sind, an denen eine äußere zylindrische Hülse so angeordnet ist, daß eine vom Kopfreibungsmoment M_{K} abhängige Torsionsspannung so über eine druckelastische torsionssteife Membran und/oder wenigstens einen Balg oder Kompensator sowie über die äußere Hülse auf die Verbindungsarme einwirkt, daß auf wenigstens einem Verbindungsarm in wenigstens einer Meßstelle mit geeigneten Dehnungsmeßstreifen eine vom Kopfreibungsmoment M_{K} abhängige Biegespannung meßbar ist.

Dabei zeichnet sich die äußere Hülse mit einer einfachen Bauweise insbesondere dadurch aus, daß die äußere Hülse in allen Bereichen vorzugsweise eine in etwa gleichmäßige Materialdicke D aufweist.

Die Kraft/Moment-Aufnehmer nach der Erfindung mit einer torsions- und druckelastischen zylindrischen zentralen Einspannhülse, die drehbar in einem Gehäuse abgestützt ist, wobei die Abstützung der Einspannhülse im Gehäuse an einem Stirnende, vorzugsweise an dem Stirnende, an dem der zweite, vorzugsweise rechteckförmige, Flansch angeformt ist, über zwei diametral von der Einspannhülse abragende biegeelastische Arme erfolgt, zeichnen sich dadurch aus, daß auf den biegelastischen Armen wenigstens eine, vorzugsweise jeweils eine, d.h. auf jedem Arm wenigstens eine Meßstelle für die vom Gesamtanzugsmoment M_{A} abhängige Biegespannung vorgesehen ist, was in vorteilhafter Weise gegenüber aus dem Stand der Technik bekannten Lösungen ein erleichtertes Messen der vom Gesamtanzugsmoment M_{A} abhängigen Biegespannung darstellt.

Weitere Vorteile und Ausgestaltungen der vorliegenden Erfindung werden anhand exemplarischer Ausführungsbeispiele und anhand der Zeichnung beschrieben:

Es zeigen:

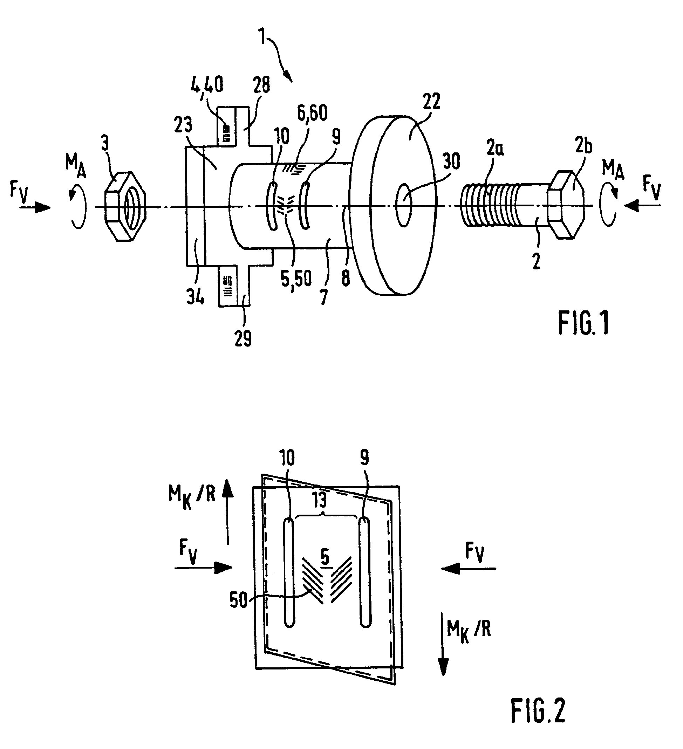

- Fig. 1: schematisiert eine torsions- und druckelastische zylindrische zentrale Einspannhülse eines Kraft/Moment-Aufnehmers in perspektivischer Darstellung, auf der wenigstens eine Meßstelle für eine vom Kopfreibungsmoment M_{K} abhängige Torsionsspannung und wenigstens eine Meßstelle für eine von der axialen Vorspannkraft Fv abhängige Druckspannung angeordnet ist;
- Fig. 2: schematisiert einen abgewickelten Ausschnitt einer auf der zentralen Einspannhülse nach Fig. 1 angeordneten Meßstelle für die vom Kopfreibungsmoment M_{K} abhängige Torsionsspannung;

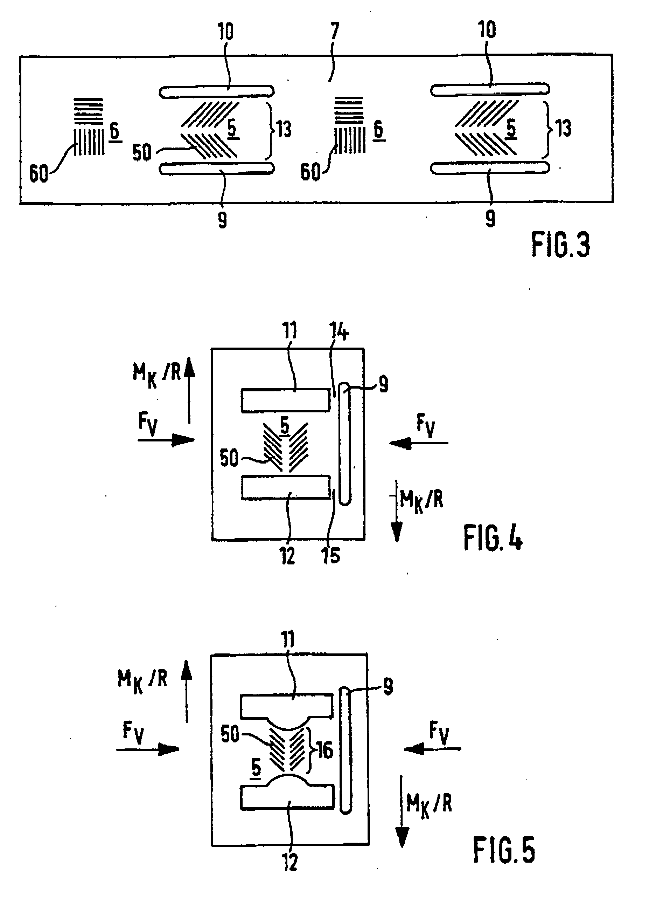

- Fig. 3: schematisiert einen insgesamt abgewickelten Abschnitt der zentralen Einspannhülse nach Fig. 1 mit wechselnd angeordneten Meßstellen für die vom Kopfreibungsmoment M_{K} abhängige Torsionsspannung und von der Vorspannkraft Fv abhängige Druckspannung;
- Fig. 4: ein weiteres Ausführungsbeispiel wie in Fig. 2;
- Fig. 5: ein weiteres Ausführungsbeispiel wie in Fig. 2;

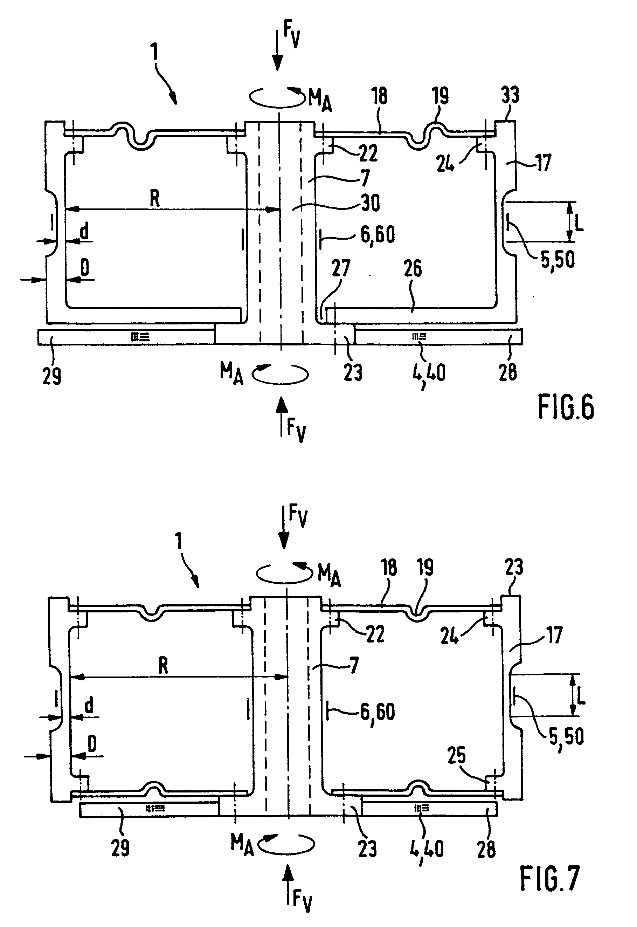

- Fig. 6: schematisiert eine torsions- und druckelastische zylindrische zentrale Einspannhülse eines Kraft/Moment-Aufnehmers, auf der wenigstens eine Meßstelle für eine von der axialen Vorspannkraft Fv abhängige Druckspannung angeordnet ist, und die von einer äußeren Hülse koaxial umgeben ist, auf der wenigstens eine Meßstelle für eine vom Kopfreibungsmoment M_{K} abhängige Torsionsspannung angeordnet ist, welche durch eine druckelastische torsionssteife Membran entkoppelt ist;
- Fig. 7: ein weiteres Ausführungsbeispiel wie in Fig. 6, wobei die Meßstelle für eine vom Kopfreibungsmoment M_{K} abhängige Torsionsspannung durch zwei druckelastische torsionssteife Membranen entkoppelt ist;

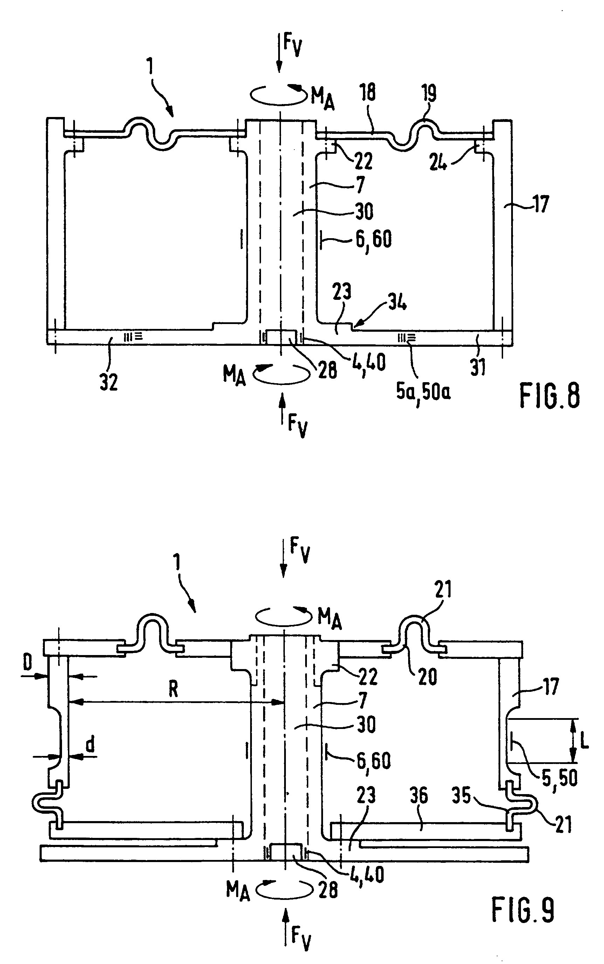

- Fig. 8: schematisiert eine torsions- und druckelastische zylindrische zentrale Einspannhülse eines Kraft/Moment-Aufnehmers, auf der wenigstens eine Meßstelle für eine von der axialen Vorspannkraft Fv abhängige Druckspannung angeordnet ist, und die von einer äußeren Hülse koaxial so umgeben ist, daß eine vom Kopfreibungsmoment M_{K} abhängige Torsionsspannung so über eine druckelastische torsionssteife Membran und über die äußere Hülse auf zwei Verbindungsarme einwirkt, daß insbesondere auf den Seitenflächen der Verbindungsarme in wenigstens einer Meßstelle eine vom Kopfreibungsmoment M_{K} abhängige Biegespannung meßbar ist;
- Fig. 9: schematisiert eine torsions- und druckelastische zylindrische zentrale Einspannhülse eines Kraft/Moment-Aufnehmers, auf der wenigstens eine Meßstelle für eine von der axialen Vorspannkraft Fv abhängige Druckspannung angeordnet ist, und die von einer äußeren Hülse koaxial umgeben ist, auf der wenigstens eine Meßstelle für eine vom Kopfreibungsmoment M_{K} abhängige Torsionsspannung angeordnet ist, welche durch wenigstens einen druckelastischen torsionssteifen Balg oder Kompensator entkoppelt ist; und

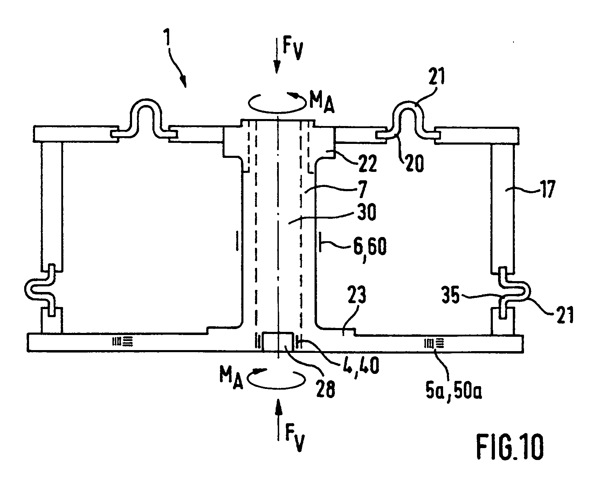

- Fig. 10: schematisiert eine torsions- und druckelastische zylindrische zentrale Einspannhülse eines Kraft/Moment-Aufnehmers, auf der wenigstens eine Meßstelle für eine von der axialen Vorspannkraft Fv abhängige Druckspannung angeordnet ist, und die von einer äußeren Hülse koaxial so umgeben ist, daß eine vom Kopfreibungsmoment M_{K} abhängige Torsionsspannung so über wenigstens einen druckelastischen torsionssteifen Balg bzw. Kompensator und über die äußere Hülse auf zwei Verbindungsarme einwirkt, daß insbesondere auf den Seitenflächen der Verbindungsarme in wenigstens einer Meßstelle eine vom Kopfreibungsmoment M_{K} abhängige Biegespannung meßbar ist.

Fig. 1 zeigt schematisiert eine torsions- und druckelastische zylindrische zentrale Einspannhülse 7 eines Kraft/Moment-Aufnehmers 1 in perspektivischer Darstellung, auf der wenigstens eine Meßstelle 5 für eine vom Kopfreibungsmoment M_{K} abhängige Torsionsspannung und wenigstens eine Meßstelle 6 für eine von der axialen Vorspannkraft Fv abhängige Druckspannung angeordnet sind. Die zentrale Einspannhülse 7 weist zwei Stirnenden auf. An einem Stirnende ist ein erster, vorzugsweise ein kreisförmiger bzw. zylindrischer Flansch 22 mit einer Durchgangsöffnung 30 zur Einführung eines Schraubenbolzens 2 angeformt. Am anderen Stirnende ist ein zweiter, vorzugsweise ein rechteckförmiger, Flansch 23 mit zwei diametral vom Umfang abragenden, biegeelastischen Armen 28, 29 angeformt, die einstückig am zweiten Flansch 23 angeformt sind. Flansch 23 besitzt, ebenso wie der erste Flansch 22, in seinem Zentrum längsmittig eine Durchgangsöffnung 30, durch die das freie Ende 2a des Schraubenbolzens 2 so geführt und mit einer Mutter 3 fest verschraubt wird, daß der Schraubenkopf 2b des Schraubenbolzens 2 am ersten Flansch 22 anliegt. Zur Aufnahme von radialen Kräften ist der erste, vorzugsweise zylindrische, Flansch 22 in einem nicht dargestellten äußeren Gehäuse wälzgelagert. Über den zweiten, vorzugsweise rechteckförmigen, Flansch 23 wird das gesamte, beim Anziehen der Schraubverbindung (2, 3) aufgebrachte Anzugsmoment M_{A} über die beiden biegeelastischen Arme 28, 29 ebenfalls in das Gehäuse abgeleitet.

Für die Messung einer von Kopfreibungsmoment M_{K} abhängigen Torsionsspannung ist, etwas vergrößert dargestellt, auf der zentralen Einspannhülse 7 wenigstens eine Meßstelle 5 vorgesehen. Bevorzugt sind zwei gleichartige, um 180° gegeneinander auf dem Umfang der Einspannhülse 7 versetzt angeordnete Meßstellen 5 für eine Messung der vom Kopfreibungsmoment M_{K} abhängigen Torsionsspannung vorgesehen. Die dazu in einer Meßstelle 5 angeordneten Dehnungsmeßstreifen 50 sind in einem Winkel von 90° zueinander versetzt angeordnet. Zur Längsachse 8 der Einspannhülse 7 beträgt der Winkel der Dehnungsmeßstreifen 50 jeweils 45°.

Eine weitere Meßstelle 6 dient der Messung einer von der axialen Vorspannkraft F_{V} abhängigen Druckspannung und ist ebenfalls auf der zentralen Einspannhülse 7 angeordnet. In der Meßstelle 6 sind zwei Dehnungsmeßstreifen 60 angeordnet, wobei ein Dehnungsmeßstreifen parallel und der andere quer zur Längsachse 8 der zentralen Einspannhülse 7 angeordnet ist.

Für die Messung einer vom Gesamtanzugsmoment M_{A} abhängigen Biegespannung ist auf den beiden vorzugsweise quaderförmig ausgebildeten biegeelastischen Armen 28, 29 wenigstens eine Meßstelle 4 vorgesehen, die zwei Dehnungsmeßstreifen 40 umfaßt, die wie die Dehnungsmeßstreifen 60 zueinander und zur Längsachse 8 der zentralen Einspannhülse 7 ausgerichtet sind.

Vorzugsweise sind jeweils immer wenigstens zwei Paar Dehnungsmeßstreifen 40, 50, 50a, 60 so angeordnet, daß eine Wheatstonesche Meßbrücke ausbildbar ist.

Zur maximalen bzw. vollständigen Entkopplung von Einflüssen der von der Vorspannkraft Fv abhängigen Druckspannung auf eine Meßstelle 5 der vom Kopfreibungsmoment M_{K} abhängigen Torsionsspannungen wird erfindungsgemäß die Meßstelle 5, 5a für die vom Kopfreibungsmoment M_{K} abhängige Torsionsspannung durch mechanische Mittel von einem Einfluß der von der axialen Vorspannkraft Fv abhängigen Druckspannung entkoppelt.

Nach Fig. 1 wird die mechanische Entkopplung insbesondere durch in die zentrale Einspannhülse 7 eingebrachte Entlastungsschlitze 9, 10 bzw. Entlastungsausnehmungen 11, 12 erreicht. Die Entlastungsschlitze 9, 10 sind auf der zentralen Einspannhülse 7 quer zur Längsachse 8 der Einspannhülse 7 eingebracht. Die Länge der Entlastungsschlitze 9, 10 ist bevorzugt größer als ihr Abstand voneinander, vorzugsweise eineinhalbmal so groß, insbesondere doppelt so groß wie ihr Abstand voneinander. Durch die Entlastungsschlitze 9, 10 wird, wie schematisiert und ausschnittsweise vergrößert in Fig. 2 mit einem abgewikelten Ausschnitt einer auf der zentralen Einspannhülse 7 nach Fig. 1 angeordneten Meßstelle für die vom Kopfreibungsmoment M_{K} abhängige Torsionsspannung dargestellt, ein stegförmiger Abschnitt 13, auch als Steg 13 bezeichnet, gebildet, auf dem mittig die Meßstelle 5 mit den Dehnungsmeßstreifen 50 angeordnet ist. Die Entlastungsschlitze 9, 10 heben die Spannungsverläufe in der zylindrischen Einspannhülse 7 wenigstens teilweise auf bzw. kanalisieren diese. Insbesondere eine Stauchung (Druckspannung) der zentralen Einspannhülse 7 durch die axiale Vorspannkraft Fv wird durch die Entlastungsschlitze 9, 10 maximal bzw. vollständig im Bereich der Meßstelle 5 aufgefangen. Eine Scherung (Torsionsspannung) der zylindrischen Oberfläche der zentralen Einspannhülse 7 durch eine Umfangskraft M_{K}/R, in Fig. 2 überproportional dargestellt und zusätzlich mittels einer gestrichelten Linie gekennzeichnet, wird maximal bzw. vollständig auf den Steg 13 und damit ungemindert auf die dort angeordneten Dehnungsmeßstreifen 50 übertragen. Ein Übersprechen der Vorspannkraft F_{V} in die Meßstelle 5 für das Kopfreibungsmoment M_{K} wird so zuverlässig ausgeschaltet.

Angriffspunkte bzw. Wirkrichtungen der Kräfte und Momente, insbesondere Fv, M_{A} und M_{K}, sind in den Fig. 1 bis 9 schematisch durch Pfeile gekennzeichnet.

Fig. 3 zeigt, wie die Meßstellen 5 und 6 auf der zentralen Einspannhülse 7 vorzugsweise angeordnet sein können. Darin ist schematisiert ein insgesamt abgewickelter Abschnitt der zentralen Einspannhülse 7 nach Fig. 1 mit wechselnd angeordneten Meßstellen 5, 6 für die vom Kopfreibungsmoment M_{K} abhängige Torsionsspannung und von der Vorspannkraft F_{V} abhängige Druckspannung dargestellt. Vorzugsweise werden je zwei gleichartige Meßstellen 5, 6 um jeweils 180° gegeneinander versetzt auf dem Umfang der zentralen Einspannhülse 7 angeordnet. Während auf die Meßstelle 6 die von der Vorspannkraft F_{V} abhängige Druckspannung ungemindert wirken kann, ist die Meßstelle 5 für die vom Kopfreibungsmoment M_{K} abhängige Torsionsspannung durch die Entlastungsschlitze 9, 10 hinsichtlich der Vorspannkraft F_{V} entlastet. Die Scherung (Torsionsspannung) in der Einspannhülse 7 wird unvermindert auf den Steg 13 zwischen den Entlastungsschlitzen 9, 10 und damit auf die Meßstelle 5 übertragen. Da der durch die Entlastungsschlitze 9, 10 bestimmte Anteil des Gesamtquerschnittes nicht mehr zum Tragen der Vorspannkraft F_{V} zur Verfügung steht, ist bei dieser und den folgenden Ausgestaltungen nach der Erfindung die Wandstärke D der zentralen Einspannhülse 7 entsprechend so ausgelegt, daß eine Überlastung vermieden ist. Um die Torsionsverformung an der Meßstelle 5 für das Kopfreibungsmoment M_{K} gegenüber Ausführungen nach dem Stand der Technik zu vergrößern, wird erfindungsgemäß bevorzugt die Wandstärke D im Bereich des Steges 13 gezielt auf eine Wandstärke d vermindert. Dies ist auch deshalb möglich, weil an dieser Stelle eben keine Belastung durch die Vorspannkraft Fv auftritt. Eine solche Verminderung der Wandstärke D kann beispielsweise durch Fräsen, Schleifen oder funkenerosives Abtragen erfolgen, so daß im Bereich des Steges 13 bzw. der Meßstelle 5 für die vom Kopfreibungsmoment M_{K} abhängige Torsionsspannung eine Abflachung der im übrigen zylindrischen Einspannhülse 7 oder sogar eine Tasche entsteht. Die Entlastungsschlitze 9, 10 sind beispielsweise ebenfalls durch Fräsen oder funkenerosives Sägen herstellbar.

In Fig. 4 ist ein weiteres bevorzugtes Ausführungsbeispiel nach der Erfindung dargestellt. Zur mechanischen Entkopplung der Meßstelle 5 für die vom Kopfreibungsmoment M_{K} abhängige Torsionsspannung von der von der Vorspannkraft Fv abhängigen Druckspannung dient hier, wie dargestellt, wenigstens ein Entlastungsschlitz 9. Zur gezielten Übertragung der Scherung (Torsionsspannung) auf den Steg 13 dienen zwei dünne Zungen 14, 15, die bei wechselnder Drehrichtung einer vom Kopfreibungsmoment M_{K} abhängigen Torsionsspannung abwechselnd auf Zug und Druck beansprucht werden. Der Steg 13 für die Meßstelle 5 für die vom Kopfreibungsmoment M_{K} abhängige Torsionsspannung wird durch zwei rechteckförmige Entlastungsausnehmungen 11, 12 begrenzt, die etwa rechtwinklig zur Längserstreckung des Entlastungsschlitzes 9 angeordnet sind und die dünnen Zungen 14, 15 bilden. Die dünnen Zungen 14, 15 sind durch die Entlastungsausnehmungen 11, 12 von den Einflüssen der von der Vorspannkraft Fv abhängigen Druckspannung maximal befreit. In diesem Ausführungsbeispiel sind die der Meßstelle 5 für die vom Kopfreibungsmoment M_{K} abhängige Torsionsspannung zugewandten Seitenwandungen der Entlastungsausnehmungen 11, 12 als Geraden ausgeführt, und die Seitenwandungen bilden dabei den Steg 13, dessen Wandstärke d im Bereich der Meßstelle 5 für die vom Kopfreibungsmoment M_{K} abhängige Torsionsspannung geringer ausgeführt ist als die übrige Wandstärke D der zentralen Einspannhülse 7.

Die Vergrößerung der Torsionsverformung an der Meßstelle 5 für die vom Kopfreibungsmoment M_{K} abhängige Torsionsspannung kann gemäß dem Ausführungsbeispiel nach Fig. 5 zusätzlich durch eine lokale Einschnürung 16 im mittleren Bereich des Steges 13, evtl. unter Beibehaltung der Materialstärke D erreicht werden, wobei die lokale Einschnürung 16 durch vorzugsweise halbkreisförmige Erweiterungen im mittleren Bereich der der Meßstelle 5 für die vom Kopfreibungsmoment M_{K} abhängige Torsionsspannung zugewandten Seitenwand der Entlastungsausnehmungen 11, 12 gebildet wird. Die der Meßstelle 5 für die vom Kopfreibungsmoment M_{K} abhängige Torsionsspannung abgewandten Seiten erstrecken sich vorzugsweise nicht über die Länge des Entlastungsschlitzes 9 bzw. 10.

Schließlich ist eine Kombination der bisherigen Ausführungen möglich, welche allesamt Maßnahmen zur wenigstens teilweisen lokalen Aufhebung insbesondere der Druckspannungsverläufe in der zentralen Einspannhülse 7 aufzeigen, wobei die Meßstellen 5 und 6 auf der zentralen Einspannhülse 7 angeordnet sind.

In den folgenden Ausführungsbeispielen sind lediglich die Meßstellen 6 zur Messung einer von der Vorspannkraft F_{V} abhängigen Druckspannung auf der zentralen Einspannhülse 7 angeordnet.

Fig. 6 zeigt schematisiert eine torsions- und druckelastische zylindrische zentrale Einspannhülse 7 eines Kraft/Moment-Aufnehmers 1, auf der wenigstens eine Meßstelle 6 für eine von der axialen Vorspannkraft Fv abhängige Druckspannung angeordnet ist, und die von einer äußeren Hülse 17 koaxial umgeben ist, auf der wenigstens eine Meßstelle 5 für eine vom Kopfreibungsmoment M_{K} abhängige Torsionsspannung angeordnet ist, welche durch eine druckelastische torsionssteife Membran 18 entkoppelt ist; die vom Kopfreibungsmoment M_{K} abhängige Torsionsspannung wird also auf einer äußeren Hülse 17 gemessen. Die Meßstelle 5 für die vom Kopfreibungsmoment M_{K} abhängige Torsionsspannung ist dazu von Einflüssen der von der Vorspannkraft F_{V} abhängigen Druckspannung über wenigstens eine Membran 18 weitgehend entkoppelt.

Die Lagerung bzw. Abstützung der torsions- und druckelastischen zentralen Einspannhülse 7 erfolgt wie oben zu Fig. 1 beschrieben in einem nicht dargestellten Gehäuse. Die Messung einer vom Gesamtanzugsmoment M_{A} abhängigen Biegespannung erfolgt gleichfalls auf den biegeelastischen Armen 28, 29, die einstückig am zweiten, vorzugsweise rechteckförmigen, Flansch 23 der zentralen Einspannhülse 7 angeformt sind. Die äußere Hülse 17 weist im Ausführungsbeispiel nach Fig. 6 eine topfartige Form auf mit einem benachbart zur Außenkante 33 ihrer offenen Seite angeformten Innenflansch 24 und einer kreisförmigen Bodenplatte 26 mit einem Loch 27, durch das sich die zentrale Einspannhülse 7 hindurch erstreckt, so daß bodenseitig die äußere Hülse 17 über die Bodenplatte 26 am rechteckförmigen Flansch 23 der zentralen Einspannhülse 7 und an ihrer offenen Seite über eine zwischen den Flanschen 22, 24 angeordnete kreisförmige Membrane 18 druckelastisch und torsionssteif gehaltert ist.

Der Durchmesser des Lochs 27 in der Bodenplatte 16 ist größer als derjenige der zentralen Einspannhülse 7 und kleiner als die Kantenlänge des zweiten, vorzugsweise rechteckförmigen, annähernd quadratischen, Flansches 23. An ihrer, den biegeelastischen Armen 28, 29 zugewandten Seite stützt sich die Bodenplatte 26 der äußeren Hülse 17 am Flansch 23 ab und bildet im Auflagebereich eine insbesondere spielfreie Verbindung. Über diese Verbindung wird die Meßgröße bzw. der Meßwert für die vom Kopfreibungsmoment M_{K} abhängige Torsionsspannung in die Meßstelle 4 für das Gesamtanzugsmoment M_{A} abgeleitet. Das Gesamtmoment stützt sich also nicht über die zentrale Einspannhülse 7 ab, sondern wird an ihr vorbei direkt über die beiden biegeelastischen Arme 28, 29 in das Gehäuse abgeleitet. Im Bereich der Meßstelle 5 für die vom Kopfreibungsmoment M_{K} abhängige Torsionsspannung weist die äußere Hülse 17 eine geringere Dicke d auf, als in dem Bereich, der sich von der Meßstelle 5 für die vom Kopfreibungsmoment M_{K} abhängige Torsionsspannung wegerstreckt.

Schließlich weist die kreisförmige Membrane 18 wenigstens eine umlaufende Sicke 19 auf, die ein Übersprechen der Vorspannkraft F_{V} in die Meßstelle 5 für die vom Kopfreibungsmoment M_{K} abhängige Torsionsspannung weitgehend minimiert.

Alternativ zu einer Bodenplatte 26 kann, wie in Fig. 7 ersichtlich, eine zweite druckelastische torsionssteife kreisförmige Membrane 18 zwischen der äußeren Hülse 17 und Flansch 23 angebracht sein, die sich wie ein Deckel zwischen einem kreisförmigen, an der äußeren Hülse 17 angeformten, Innenflansch 25 und dem zweiten Flansch 23 erstreckt.

Eine weitere mechanische Entkopplung der Meßstelle 5 für die vom Kopfreibungsmoment M_{K} abhängige Torsionsspannung von der von der axialen Vorspannkraft Fᵥ abhängige Druckspannung erfolgt erfindungsgemäß bevorzugt durch geeignete Wahl einer geometrischen Anordnung der Meßstelle 5 für die vom Kopfreibungsmoment M_{K} abhängige Torsionsspannung auf der äußeren Hülse 17, insbesondere durch Wahl einer Länge L des Meßstellenbereiches 5 auf der äußeren Hülse 17, eines Radius R der äußeren Hülse 17, und einer Stärke d der äußeren Hülse 17 im Bereich der Meßstelle 5 für die vom Kopfreibungsmoment M_{K} abhängige Torsionsspannung, so daß der Einfluß von Scherungen (Torsionsspannungen) an den Meßstellen 6 für die von der Vorspannkraft Fv abhängige Druckspannung auf der inneren Einspannhülse 7 erheblich minimierbar ist.

Zusätzlich zur Verminderung der Materialdicke D im Bereich der Meßstellen 5 für die vom Kopfreibungsmoment M_{K} abhängige Torsionsspannung auf der äußeren Hülse 17 kann die Empfindlichkeit der Meßstellen 5 für die vom Kopfreibungsmoment M_{K} abhängige Torsionsspannung durch beispielsweise radiale Bohrungen oder durch Entlastungsschlitze 9, 10 bzw. Entlastungsausnehmungen 11, 12 wie in der Beschreibung zu den Fig. 1 - 5 weiter oben erörtert wurde, erhöht werden.

Auch im Ausführungsbeispiel nach Fig. 8 wird die von der Vorspannkraft Fv abhängige Druckspannung auf der zentralen Einspannhülse 7 gemessen. Schematisiert zeigt Fig. 8 eine torsions- und druckelastische zylindrische zentrale Einspannhülse 7 eines Kraft/Moment-Aufnehmers 1, auf der wenigstens eine Meßstelle 6 für eine von der axialen Vorspannkraft Fᵥ abhängige Druckspannung angeordnet ist, und die von einer äußeren Hülse 17 koaxial so umgeben ist, daß eine vom Kopfreibungsmoment M_{K} abhängige Torsionsspannung so über eine druckelastische torsionssteife Membran und über die äußere Hülse 17 auf zwei Verbindungsarme 31, 32 einwirkt, daß insbesondere auf den Seitenflächen der Verbindungsarme 31, 32 in wenigstens einer Meßstelle 5a eine vom Kopfreibungsmoment M_{K} abhängige Biegespannung meßbar ist. Die Entkopplung der Meßstellen 5a, 6 voneinander erfolgt über eine zwischen den Flanschen 22, 24 angeordnete Membrane 18, die eine umlaufende Sicke 19 hat. Die äußere Hülse 17 ist als beidseitig offener Zylinder ausgebildet und weist über ihre gesamte Axiallänge eine gleichmäßige Materialdicke D auf, d.h. die äußere Hülse 17 dient wie die Membrane 18 nur noch zur Übertragung der vom Kopfreibungsmoment M_{K} abhängigen Torsionsspannung. Am rechteckförmigen Flansch 23 sind zusätzlich zu den biegeelastischen Armen 28, 29 an den Seitenwänden 34 die einstückigen Verbindungsarme 31, 32, die sich in ihrer Länge und/oder ihrer Dicke von den biegeelastischen Armen 28, 29 unterscheiden können, angeformt. Durch geeignete Festlegung der Länge und der Dicke der Verbindungsarme 31, 32 kann die Empfindlichkeit der Meßstelle 5a für die vom Kopfreibungsmoment M_{K} abhängige Biegespannung optimal ausgelegt werden. An ihrer den Verbindungsarmen 31, 32 zugewandten Seite ist die äußere Hülse 17 mit den Armen 31, 32 des Flansches 23, insbesondere spielfrei, verbunden, beispielsweise durch Verschrauben und/oder Verschweißen. Die Dehnungsmeßstreifen 50a in der Meßstelle 5a sind wie die Dehnungsmeßstreifen 40 und 60 zueinander und zur Längsachse 8 der zentralen Einspannhülse 7 angeordnet. Die Messung des Kopfreibungsmomentes M_{K} erfolgt somit auf den auf Biegung beanspruchten Verbindungsarmen 31, 32 des zweiten, vorzugsweise rechteckförmigen, Flansches 23. Das gesamte, beim Anziehen der Schraubverbindung aufgebrachte Anzugsmoment M_{A} wird wiederum auf den biegeelastischen Armen 28, 29 in den Meßstellen 4 gemessen und über die biegeelastischen Arme 28, 29 in ein nicht dargestelltes Gehäuse abgeleitet.

Fig. 9 zeigt schematisiert eine torsions- und druckelastische zylindrische zentrale Einspannhülse 7 eines Kraft/Moment-Aufnehmers 1, auf der wenigstens eine Meßstelle 6 für eine von der axialen Vorspannkraft Fv abhängige Druckspannung angeordnet ist, und die von einer äußeren Hülse 17 koaxial umgeben ist, auf der wenigstens eine Meßstelle 5 für eine vom Kopfreibungsmoment M_{K} abhängige Torsionsspannung angeordnet ist, welche durch wenigstens einen druckelastischen torsionssteifen Balg oder Kompensator 20, 35 mechanisch entkoppelt ist. Dazu weist der Balg oder Kompensator 20, 35 wenigstens eine Welle 21 auf.

Ein erster, an sich bekannter Balg bzw. Kompensator 20 mit wenigstens einer Welle 21 ist im Ausführungsbeispiel nach Fig. 9 zwischen dem Flansch 22 und der äußerer Hülse 17 formschlüssig angebracht. Ein zweiter Balg bzw. Kompensator 35 mit wenigstens einer Welle 21 verbindet die äußere Hülse 17 über eine Boden 36 mit dem rechteckförmigen Flansch 23. Die Verbindung erfolgt formschlüssig, wobei die formschlüssige Verbindung beispielsweise durch Verschrauben, Verklemmen, Verkleben oder Verschweißen hergestellt sein kann. Der erste, vorzugsweise zylindrische, Flansch 22 ist aus Montagegründen in diesem Ausführungsbeispiel nicht einstückig an die zentrale Einspannhülse 7 angeformt, sondern wird auf die zentrale Einspannhülse 7 aufgesteckt. Die Steckverbindung kann sowohl lose ausgebildet als auch beispielsweise verschraubt sein. Zum Messen der vom Kopfreibungsmoment M_{K} abhängigen Torsionsspannung ist auf der äußeren Hülse 17 eine Meßstelle 5 angeordnet.

Fig. 10 zeigt schematisiert eine torsions- und druckelastische zylindrische zentrale Einspannhülse 7 eines Kraft/Moment-Aufnehmers 1, auf der wenigstens eine Meßstelle 5a für eine von der axialen Vorspannkraft Fv abhängige Druckspannung angeordnet ist, wobei diese von einer äußeren Hülse 17 koaxial so umgeben ist, daß eine vom Kopfreibungsmoment M_{K} abhängige Torsionsspannung so über wenigstens einen druckelastischen torsionssteifen Balg bzw. Kompensator 20, 35 und über die äußere Hülse 17 auf zwei Verbindungsarme 31, 32 einwirkt, daß in wenigstens einer Meßstelle 5a eine vom Kopfreibungsmoment M_{K} abhängige Biegespannung meßbar ist.

Ein erster an sich bekannter Balg bzw. Kompensator 20 mit wenigstens einer Welle 21 ist wie im Ausführungsbeispiel nach Fig. 9 zwischen dem ersten Flansch 22 und der äußeren Hülse 17 formschlüssig angebracht. Ein zweiter Balg bzw. Kompensator 35 mit wenigstens einer Welle 21 verbindet die äußere Hülse 17 direkt mit am zweiten Flansch 23 einstückig angeformten Verbindungsarmen 31, 32. Die Verbindung erfolgt formschlüssig, wobei die formschlüssige Verbindung beispielsweise durch Verschrauben, Verklemmen, Verkleben oder Verschweißen hergestellt sein kann. Der zylindrische Flansch 22 ist gleichfalls, wie in Fig. 9 beschrieben, aufsteckbar ausgeführt. Zum Messen der vom Kopfreibungsmoment M_{K} abhängigen Torsionsspannung ist auf den beiden um 180° versetzt angeordneten Verbindungsarmen 31, 32 wenigstens eine Meßstelle 5a, vorzugsweise jeweils eine Meßstelle 5a zum Messen der vom Kopfreibungsmoment M_{K} abhängigen Biegespannung angeordnet.

Zu den Ausführungsbeispielen gemäß der Figuren 6 bis 10 sei noch angemerkt, daß insbesondere durch geeignete Gestaltung der zentralen Einspannhülse 7, der Membran 18, des Balgs bzw. Kompensators 20, 35 und/oder der äußeren Hülse 17 das Verhältnis des von der Vorspannkraft Fᵥ bzw. Druckspannung abhängige Übersprechsignals (Störgröße) zu dem Meßsignal (Nutzgröße) für die vom Kopfreibungsmoment M_{K} anhängige Torsions- bzw. Biegespannung so beeinflußbar ist, daß das Verhältnis hinreichend klein wird. Zudem ist durch geeignete Gestaltung insbesondere der zentralen Einspannhülse 7 und der äußeren Hülse 17 das Verhältnis der Meßsignale (Nutzgrößen) für die vom Kopfreibungsmoment M_{K} abhängige Torsions- bzw. Biegespannung und für die von der Vorspannkraft F_{V} abhängige Druckspannung so beeinflußbar, daß beispielsweise in etwa gleich hohe Meßsignale (Nutzgrößen) erreichbar sind.

Die besonderen Formgebungen eines Kraft/Moment-Aufnehmers 1 nach den erfindungsgemäß bevorzugten Ausführungsbeispielen erlauben in vorteilhafter Weise die Bestimmung des Gesamtanzugsmoments M_{A}, des Kopfreibungsmoments M_{K} und der Vorspannkraft Fv, wie sie in internationalen Normen und Hausnormen beispielsweise der wichtigsten Automobilhersteller gefordert werden. Zudem ist mit einer Meßvorrichtung nach der Erfindung das naturgemäß schwierig genau zu messende Kopfreibungsmoment M_{K} mit einer erhöhten Meßgenauigkeit erfaßbar und normgerecht auswertbar. Dadurch ist auch das Gewindereibungsmoment M_{G} genauer bestimmbar und eine besser gesicherte Aussage über Qualität und Zuverlässigkeit der Schraubverbindung 2, 3 ermöglicht.

Mittels zusätzlicher Soft- und Hardware können als Ergebnisse Reibungskoeffizienten, Protokolle und gegebenenfalls Kurven und Tabellen ausgegeben werden. Schraubenhersteller können so mit vorhandener Software schnell und ohne Umrüstung verschiedenartige Schraubenbolzen 2 nach unterschiedlichen Normen prüfen und die Protokolle ihren Kunden mitliefern.

Die Erfindung eignet sich vorzugsweise für einen Einsatz in der Qualitätssicherung, insbesondere in der Automobilindustrie. Überschraubmomente von selbsthemmenden Muttern 3 sind ein weiteres Anwendungsgebiet, ebenso Wareneingangskontrolle und Forschung und Entwicklung.

### Bezugszeichenliste

- 1: Kraft/Moment-Aufnehmer
- 2: Schraubenbolzen
- 2a: freie Ende des Schraubenbolzens 2
- 2b: Kopf des Schraubenbolzens 2
- 3: Mutter
- 4: Meßstelle für die vom Gesamtanzugsmoment M_{A} abhängige Biegespannung
- 5: Meßstelle für die vom Kopfreibungsmoment M_{K} abhängige Torsionsspannung
- 5a: Meßstelle für die vom Kopfreibungsmoment M_{K} abhängige Biegespannung
- 6: Meßstelle für die von der axialen Vorspannkraft Fᵥ abhängige Druckspannung
- 7: zentrale Einspannhülse
- 8: Längsachse der Einspannhülse 7
- 9, 10: Entlastungsschlitz
- 11, 12: Entlastungsausnehmung
- 13: Steg
- 14, 15: Zunge
- 16: Einschnürung
- 17: äußere Hülse
- 18: Membran
- 19: Sicke der Membran 18
- 20, 35: Balg bzw. Kompensator
- 21: Welle des Balgs 20, 35 bzw. Kompensators 20, 35
- 22: erster, vorzugsweise zylindrischer, Flansch der zentralen Einspannhülse 7
- 23: zweiter, vorzugsweise rechteckförmiger, Flansch der zentralen Einspannhülse 7
- 24, 25: Innenflansche der äußeren Hülse 17
- 26: Bodenplatte
- 27: Loch
- 28, 29: biegeelastische Arme
- 30: Durchgangsöffnung
- 31, 32: Verbindungsarme
- 33: Außenkante der äußeren Hülse 17
- 34: Seitenwände des rechteckförmigen Flansches 23
- 36: Platte
- 40: Dehnungsmeßstreifen zur Messung einer vom Gesamtanzugsmoment M_{A} abhängigen Biegespannung
- 50: Dehnungsmeßstreifen zur Messung einer vom Kopfreibungsmoment M_{K} abhängigen Torsionsspannung
- 50a: Dehnungsmeßstreifen zur Messung einer vom Kopfreibungsmoment M_{K} abhängigen Biegespannung
- 60: Dehnungsmeßstreifen zur Messung einer von der axialen Vorspannkraft Fv abhängigen Druckspannung

## Patentansprüche

1. Meßvorrichtung zur Bestimmung des Gesamtanzugsmoments M_{A}, des Kopfreibungsmoment M_{K} und der Vorspannkraft F_{V} einer angezogenen und in einem Kraft/Moment-Aufnehmer (1) gehalterten Schraubverbindung (2, 3) durch Messung resultierender Spannungen, insbesondere:
- einer vom Gesamtanzugsmoment M_{A} abhängigen Biegespannung über wenigstens eine Meßstelle (4);
- einer vom Kopfreibungsmoment M_{K} abhängigen Torsionsspannung bzw. Biegespannung über wenigstens eine Meßstelle (5) bzw. (5a); sowie
- einer von der axialen Vorspannkraft Fv abhängigen Druckspannung über wenigstens eine Meßstelle (6);
mittels Dehrnungsmeßstreifen (40, 50, 50a, 60), die am Kran/Moment-Aufuehmer (1) so angeordnet sind, daß sie zumindest jeweils eine der Meßstellen (4, 5, 5a, 6) zur Bestimmung der von M_{A}, M_{K} oder F_{V} abhängigen Spannungen bilden wobei die Messvorrichtung eine torsions-und druckelastische Einspannhülse aufweist, **dadurch gekennzeichnet, daß** die Meßstelle (5, 5a) für die vom Kopfreibungsmoment M_{K} abhängige Torsionsspannung bzw.Biegespannung durch mechanische Mittel von einem Einfluß der von der axialen Vorspannkraft Fv abhängigen Druckspannung entkoppelt ist.

2. Meßvorrichtung nach Anspruch 1, wobei der Kraft/Moment-Aufnehmer (1) eine torsions- und druckelastische zylindrische zentrale Einspannhülse (7) mit einer Längsachse (8) aufweist, auf der wenigstens eine Meßstelle (5) für die vom Kopfreibungsmoment M_{K} abhängige Torsionsspannung und wenigstens eine Meßstelle (6) für die von der axialen Vorspannkraft Fv abhängige Druckspannung angeordnet ist, **dadurch gekennzeichnet, daß** die Mittel zur Entkopplung der Meßstelle (5) für die vom Kopfreibungsmoment M_{K} abhängige Torsionsspannung wenigstens teilweise die Druckspannungen in der Einspannhülse (7) aufheben.

3. Meßvorrichtung nach Anspruch 2, **dadurch gekennzeichnet, daß** zur Entkopplung der MeßsteUe (5) für die vom Kopfreibungsmoment M_{K} abhängige Torsionsspannung wenigstens ein benachbart zu dieser in der zentralen Einspannhülse (7) eingebrachter und sich zu dessen Längsachse (8) quer, vorzugsweise etwa rechtwinklig, erstrekender Entlastungsschlitz (9) vorgesehen ist.

4. Meßvorrichtung nach Anspruch 2 oder 3, **dadurch gekennzeichnet, daß** zur Entkopplung der Meßstelle (5) für die vom Kopfreibungsmoment M_{K} abhängige Torsionsspannung wenigstens eine benachbart zu dieser in der zentralen Einspannhülse (7) eingebrachte und sich zu dessen Längsachse (8) in etwa parallel erstreckende im wesentlichen rechteckförmige Entlastungsausnehmung (11) vorgesehen ist.

5. Meßvorrichtung nach Anspruch 3, **dadurch gekennzeichnet, daß** ein zweiter Entlastungsschlitz (10) benachbart zur Meßstelle (5) für die vom Kopfreibungsmoment M_{K} abhängige Torsionsspannung vorgesehen ist, welcher im wesentlichen parallel zum ersten Entlastungsschlitz (9) angeordnet ist, wobei wie bei Längsseiten eines Rechteckes die Länge der Entlastungsschlitze (9, 10) größer als ihr Abstand voneinander ist, vorzugsweise wenigstens eineinhalb mal so groß, insbesondere doppelt so groß, so daß zwischen den Entlastungsschlitzen (9, 10) ein stegförmiger Abschnitt (13) ausgebildet ist.

6. Meßvorrichtung nach Anspruch 5, **dadurch gekennzeichnet, daß** der stegförmige Abschnitt (13) eine geringere Wandstärke d aufweist als die übrige Wandstärke D der zentralen Einspannhülse (7).

7. Meßvorrichtung nach einem der Ansprüche 3 bis 6, **dadurch gekennzeichnet, daß** wenigstens ein Entlastungsschlitz (9) und wenigstens eine Entlastungsausnehmung (11), vorzugsweise zwei sich gegenüberliegende Entlastungsausnehmungen (11, 12), in etwa rechtwinklig so zueinander berührungsfrei angeordnet sind, daß dazwischen eine schmale Zunge (14), vorzugsweise zwei schmale Zungen (14, 15), ausgebildet sind, die den stegförmigen Abschnitt (13) mit der übrigen Einspannhülse (7) verbinden.

8. Meßvorrichtung nach einem der Ansprüche 4 bis 7, **dadurch gekennzeichnet, daß** die der Meßstelle (5) für die vom Kopfreibungsmoment M_{K} abhängige Torsionsspannung zugewandten Seiten der Entlastungsausnehmungen (11, 12) als Gerade ausgebildet sind.

9. Meßvorrichtung nach einem der Ansprüche 4, bis 7, **dadurch gekennzeichnet, daß** die der Meßstelle (5) für die vom Kopfreibungsmoment M_{K} abhängige Torsionsspannung zugewandten Seiten der Entlastungsausnehmungen (11, 12) so erweitert ausgebildet sind, daß der stegförmige Abschnitt (13) wenigstens im Bereich der Meßstelle (5) für die vom Kopfreibungsmoment M_{K} abhängige Torsionsspannung eine lokale Einschnürung (16) aufweist.

10. Meßvorrichtung nach Anspruch 9, **dadurch gekennzeichnet, daß** die seitliche Erweiterung der Entlastungsausnehmungen (11, 12) im mittleren Bereich der der Meßstelle (5) für die vom Kopfreibungsmoment M_{K} abhängige Torsionsspannung zugewandten Seiten der Entlastungsausnehmungen (11, 12) ausgebildet und kreissegmentförmig oder dreieckförmig oder einer sonstigen geometrischen Form nachgebildet ist.

11. Meßvorrichtung nach einem der Ansprüche 2 bis 10, **dadurch gekennzeichnet, daß** auf der zentralen Einspannhülse (7) die Meßstelle (6) zur Ermittlung der von der Vorspannkraft F_{V} abhängigen Druckspannung und die hiervon mechanisch entkoppelte Meßstelle (5) zur Ermittlung der vom Kopfreibungsmoment M_{K} abhängigen Torsionsspannung wechselnd und gleichmäßig voneinander beabstandet, vorzugsweise jeweils zwei paar Meßstellen (5, 6) wechselnd und unter einem Winkel von 90° zueinander, angeordnet sind.

12. Meßvorrichtung nach Anspruch 1, wobei der Kraft/Moment-Aufnehmer (1) eine torsions- und druckelastische zylindrische zentrale Einspannhülse (7) mit einer Längsachse (8) aufweist, auf der lediglich die Meßstellen (6) für die von der axialen Vorspannkraft F_{V} abhängige Druckspannung angeordnet sind, **dadurch gekennzeichnet, daß** die Meßstellen (5) für die vom Kopfreibungsmoment M_{K} abhängige Torsionsspannung auf einer äußeren Hülse (17), welche die zentrale Einspannhülse (7) koaxial umschließt, angeordnet sind, die über Mittel (18, 20, 35) zur zusätzlichen mechanischen Entkopplung der Meßstellen (5) für die vom Kopfreibungsmoment M_{K} abhängige Torsionsspannung von der von der axialen Vorspannkraft F_{V} abhängigen Druckspannung mit der zentralen Einspannhülse (7) verbunden ist, wobei die Mittel (18, 20, 35) druckelastisch und torsionssteif sind.

13. Meßvorrichtung nach Anspruch 12, wobei die zentrale Einspannhülse (7) an ihrem einen Stirnende einen ersten, vorzugsweise zylindrischen, Flansch (22) und am gegenüberliegenden Stirnende einen zweiten, vorzugsweise rechteckförmigen, Flansch (23) aufweist, **dadurch gekennzeichnet, daß** zur mechanischen Entkopplung der Meßstelle (5) für die vom Kopfreibungsmoment M_{K} abhängige Torsionsspannung zwischen der äußeren Hülse (17) und der zentralen Einspannhülse (7) wenigstens eine druckelastische torsionssteife kreisförmige Membrane (18) angeordnet ist.

14. Meßvorrichtung nach Anspruch 13, **dadurch gekennzeichnet, daß** die äußere Hülse (17) ein beidseitig offener Zylinder ist, dessen beiden Enden jeweils einen Innenflansch (24, 25) aufweisen, wobei zwischen sich gegenüberliegenden Flanschen (22, 24 ; 23, 25) von zentraler Einspannhülse (7) und äußerer Hülse (17) jeweils eine kreisförmige Membrane (18) so angeordnet ist, daß die äußere Hülse (17) druckelastisch und torsionssteif an der zentralen Einspannhülse (7) gehaltert ist.

15. Meßvorrichtung nach Anspruch 13, **dadurch gekennzeichnet, daß** die äußere Hülse (17) eine topfartige Form aufweist mit einem benachbart zur Außenkante (33) ihrer offenen Seite angeformten Innenflansch (24) und einer kreisförmigen Bodenplatte (26) mit einem Loch (27), durch das sich die zentrale Einspannhülse (7) hindurch erstreckt, so daß bodenseitig die äußere Hülse (17) über die Bodenplatte (26) am zweiten Flansch (23) der zentralen Einspannhülse (17) und an ihrer offenen Seite über eine zwischen den sich gegenüberliegenden Flanschen (22, 24) von zentraler Einspannhülse (7) und äußerer Hülse (17) angeordnete kreisförmige Membrane (18) druckelastisch und torsionssteif gehaltert ist.

16. Meßvorrichtung nach einem der Ansprüche 13 bis 15, **dadurch gekennzeichnet, daß** die kreisförmige Membrane (18) wenigstens eine umlaufende Sicke (19) aufweist.

17. Meßvorrichtung nach Anspruch 12, wobei die zentrale Einspannhülse (7) an ihrem einen Stirnende einen ersten, vorzugsweise zylindrischen, Flansch (22) und am gegenüberliegenden Stirnende einen zweiten, vorzugsweise rechteckförmigen, Flansch (23) aufweist, **dadurch gekennzeichnet, daß** zur mechanischen Entkopplung der Meßstelle (5) für die vom Kopfreibungsmoment M_{K} abhängige Torsionsspannung zwischen der äußeren Hülse (17) und der zentralen Einspannhülse (7) wenigstens ein druckelastischer torsionssteifer Balg oder Kompensator (20) vorgesehen ist.

18. Meßvorrichtung nach Anspruch 17, **dadurch gekennzeichnet, daß** der Balg oder Kompensator (20) zwischen dem ersten Flansch (22) und der auf der äußeren Hülse (17) angeordneten Meßstelle (5) für die vom Kopfreibungsmoment M_{K} abhängige Torsionsspannung angeordnet ist.

19. Meßvorrichtung nach Anspruch 17 oder 18, **dadurch gekennzeichnet, daß** ein zweiter druckelastischer torsionssteifer Balg oder Kompensator (35) vorgesehen ist, der vorzugsweise zwischen der Meßstelle (5) für die vom Kopfreibungsmoment M_{K} abhängige Torsionsspannung und einer mit dem zweiten Flansch (23) verbundenen kreisförmigen Platte (36) angeordnet ist.

20. Meßvorrichtung nach einem der Ansprüche 17 bis 19, **dadurch gekennzeichnet, daß** die Bälge oder Kompensatoren (20, 35) wenigstens eine umlaufende Welle (21) aufweisen.

21. Meßvorrichtung nach einem der Ansprüche 12 bis 20, **dadurch gekennzeichnet, daß** äußerer Hülse (17), Membran (18), Balg bzw. Kompensator (20, 35) und/oder zentrale Einspannhülse (7) durch bekannte Verbindungstechniken, insbesondere durch Verschrauben und/oder Verschweißen, miteinander starr beziehungsweise spielfrei verbindbar sind.

22. Meßvorrichtung nach einem der Ansprüche 12 bis 21, **dadurch gekennzeichnet, daß** eine mechanische Entkopplung der Meßstelle (5) für die vom Kopfreibungsmoment M_{K} abhängige Torsionsspannung von der von der axialen Vorspannkraft Fv abhängigen Druckspannung durch geeignete Wahl ihrer geometrischen Anordnung auf der äußeren Hülse (17), insbesondere durch Wahl einer Länge L des Meßstellenbereiches (5) auf der äußeren Hülse (17), eines Radius R der äußeren Hülse (17), und einer Stärke d der äußeren Hülse (17) in ihrem Bereich erfolgt.

23. Meßvorrichtung nach Anspruch 22, **dadurch gekennzeichnet, daß** die Wandstärke d der äußeren Hülse (17) im Bereich der Meßstelle (5) für die vom Kopfreibungsmoment M_{K} abhängige Torsionsspannung geringer ist als die übrige Wandstärke D der äußeren Hülse (17).

24. Meßvorrichtung nach einem der Ansprüche 12 bis 23, **dadurch gekennzeichnet, daß** zur Erhöhung der Meßempfindlichkeit der auf der äußeren Hülse (17) angeordneten Meßstellen (5) für die vom Kopfreibungsmoment M_{K} abhängige Torsionsspannung die äußere Hülse (17) zusätzlich radiale Bohrungen aufweist.

25. Meßvorrichtung nach einem der Ansprüche 12 bis 24, **dadurch gekennzeichnet, daß** benachbart zu der auf der äußeren Hülse (17) angeordneten Meßstelle (5) für die vom Kopfreibungsmoment M_{K} abhängige Torsionsspannung wenigstens ein Entlastungsschlitz (9, 10) und/oder wenigstens eine Entlastungsausnehmung (11, 12) vorgesehen ist.

26. Meßvorrichtung nach einem der Ansprüche 12 bis 25, **dadurch gekennzeichnet, daß** die Meßstelle (6) zur Ermittlung der von der Vorspannkraft F_{V} abhängigen Druckspannung auf der zentralen Einspannhülse (7) und die hiervon mechanisch entkoppelte Meßstelle (5) für die vom Kopfreibungsmoment M_{K} abhängige Torsionsspannung auf der äußeren Hülse (17) relativ zueinander wechselnd, vorzugsweise paarweise wechselnd, d.h. vorzugsweise jeweils zwei Paar Meßstellen wechselnd und unter einem Winkel von 90° relativ zueinander, angeordnet sind.

27. Meßvorrichtung nach Anspruch 26, **dadurch gekennzeichnet, daß** die äußere Hülse (17) über der auf der zentralen Einspannhülse, (7) angeordneten Meßstelle (6) für die von der Vorspannkraft Fv abhängige Druckspannung eine Ausnehmung zur Plazierung eines Dehnungsmeßstreifens (60) in der Meßstelle (6) für die von der Vorspannkraft F_{V} abhängige Druckspannung aufweist.

28. Meßvorrichtung nach Anspruch 1,
- wobei der Kraft/Moment-Aufnehmer (1) eine torsions- und druckelastische zylindrische zentrale Einspannhülse (7) mit einer Längsachse (8) aufweist, auf der lediglich die Meßstellen (6) für die von der axialen Vorspannkraft F_{V} abhängige Druckspannung angeordnet sind, und
- wobei die zentrale Einspannhülse (7) an ihrem einen Stirnende einen ersten, vorzugsweise zylindrischen, Flansch (22) und am gegenüberliegenden Stirnende einen zweiten, vorzugsweise rechteckförmigen, Flansch (23) aufweist,
**dadurch gekennzeichnet, daß** am zweiten Flansch (23) zwei diametral angeordnete Verbindungsarme (31, 32) einstückig angeformt sind, an denen eine äußere zylindrische Hülse (17) so angeordnet ist, daß eine vom Kopfreibungsmoment M_{K} abhängige Torsionsspannung so über eine druckelastische torsionssteife Membran (18) und/oder wenigstens einen Balg oder Kompensator (20, 35) sowie über die äußere Hülse (17) auf die Verbindingsarme (31, 32) einwirkt, daß auf wenigstens einem Verbindungsarm (31, 32) in wenigstens einer Meßstelle (5a) mit Dehnungsmeßstreifen (50a) eine vom Kopfreibung=oment M_{K} abhängige Biegespannung meßbar ist.

29. Meßvorrichtung nach Anspruch 28, **dadurch gekennzeichnet, daß** die äußere Hülse (17) in allen Bereichen eine in etwa gleichmäßige Materialdicke D aufweist.

30. Meßvorrichtung nach einem der Ansprüche 1 bis 29, wobei der Kraft/Moment-Aufnehmer (1) eine torsions- und druckelastische zylindrische zentrale Einspannhülse (7) aufweist, die drehelastisch in einem Gehäuse abgestützt ist, wobei die Abstützung der zentralen Einspannhülse (7) im Gehäuse an einem Stirnende, vorzugsweise an dem Stirnende, an dem der zweite Flansch (23) angeformt ist, über zwei diametral von der Einspannhülse (7) abragende biegeelastische Arme (28, 29) erfolgt, **dadurch gekennzeichnet, daß** auf den biegeelastischen Armen (28, 29) wenigstens eine, vorzugsweise jeweils eine, Meßstelle (4) mit Dehnungsmeßstreifen (40) für die vom Gesamtanzugsmoment M_{A} abhängige Biegespannung vorgesehen ist.

## Claims

1. Measuring device for determining the overall tightening torque M_{A} of the head frictional moment M_{K} and prestressing force Fᵥ of a tightened threaded connection (2, 3), which is supported in a force/moment sensor (1), by measuring resulting stresses, especially:
- a bending stress, which is dependent upon the overall tightening torque M_{A}, across at least one measuring point (4);
- a torsional stress or bending stress, as the case may be, which is dependent upon the head frictional moment M_{K}, across at least one measuring point (5) or (5a) respectively; and also
- a compressive stress, which is dependent upon the axial prestressing force F_{V}, across at least one measuring point (6);
by means of strain gauges (40, 50, 50a, 60), which are arranged on the force/moment sensor (1) so that they form at least in each case one of the measuring points (4, 5, 5a, 6) for determining the stresses which are dependent upon M_{A}, M_{K} or F_{V}, wherein the measuring device has a torsionally and compressively elastic clamping sleeve, **characterized in that** the measuring point (5, 5a) for the torsional stress or bending stress, which is dependent upon the head frictional moment M_{K}, is decoupled by mechanical means from an influence of the compressive stress, which is dependent upon the axial prestressing force Fᵥ.

2. Measuring device according to Claim 1, wherein the force/moment sensor (1) has a torsionally and compressively elastic, cylindrical, central clamping sleeve (7) with a longitudinal axis (8), upon which at least one measuring point (5) for the torsional stress,
which is dependent upon the head frictional moment M_{K}, and at least one measuring point (6) for the compressive stress, which is dependent upon the axial prestressing force Fᵥ, is arranged, **characterized in that** the means for decoupling the measuring point (5) for the torsional stress, which is dependent upon the head frictional moment M_{K}, at least partially nullifies the compressive stresses in the clamping sleeve (7).

3. Measuring device according to Claim 2, **characterized in that** for decoupling the measuring point (5) for the torsional stress, which is dependent upon the head frictional moment M_{K}, at least one stress-relief slot (9) is provided, which is introduced adjacent to this in the central clamping sleeve (7) and extends transversely, preferably approximately at right angles, to its longitudinal axis (8).

4. Measuring device according to Claim 2 or 3, **characterized in that** for decoupling the measuring point (5) for the torsional stress, which is dependent upon the head frictional moment M_{K}, at least one basically rectangular stress-relief recess (11) is provided, which is introduced adjacent to this in the central clamping sleeve (7) and extends approximately parallel to its longitudinal axis (8).

5. Measuring device according to Claim 3, **characterized in that** a second stress-relief slot (10) is provided adjacent to the measuring point (5) for the torsional stress, which is dependent upon the head frictional moment M_{K}, which second stress-relief slot is arranged basically parallel to the first stress-relief slot (9), wherein as with long sides of a rectangle, the length of the stress-relief slots (9, 10) is greater than their distance from one another, preferably at least one and a half times as great, especially twice as great, so that a web-form section (13) is formed between the stress-relief slots (9, 10).

6. Measuring device according to Claim 5, **characterized in that** the web-form section (13) has a smaller wall thickness d than the rest of the wall thickness D of the central clamping sleeve (7).

7. Measuring device according to one of Claims 3 to 6, **characterized in that** at least one stress-relief slot (9) and at least one stress-relief recess (11), preferably two opposite stress-relief recesses (11, 12), are arranged approximately at right angles in a contact-free manner in relation to each other, so that in between them a narrow tongue (14), preferably two narrow tongues (14, 15), are formed, which connect the web-form section (13) to the rest of the clamping sleeve (7).

8. Measuring device according to one of Claims 4 to 7, **characterized in that** the sides of the stress-relief recesses (11, 12) which face the measuring point (5) for the torsional stress, which is dependent upon the head frictional moment M_{K}, are formed as a straight line.

9. Measuring device according to one of Claims 4 to 7, **characterized in that** the sides of the stress-relief recesses (11, 12) which face the measuring point (5) for the torsional stress, which is dependent upon the head frictional moment M_{K}, are formed in widened fashion so that the web-form section (13), at least in the region of the measuring point (5) for the torsional stress, which is dependent upon the head frictional moment M_{K}, has a local waisting (16).

10. Measuring device according to Claim 9, **characterized in that** the lateral widening of the stress-relief recesses (11, 12) is formed in the centre region of the sides of the stress-relief recesses (11, 12) which face the measuring point (5) for the torsional stress, which is dependent upon the head frictional moment M_{K}, and is reproduced in circular segmented form or triangular form, or in another geometric form.

11. Measuring device according to one of Claims 2 to 10, **characterized in that** the measuring point (6) for determining the compressive stress, which is dependent upon the prestressing force F_{V}, and the measuring point (5), which is mechanically decoupled from it, for determining the torsional stress, which is dependent upon the head frictional moment M_{K}, are arranged on the central clamping sleeve (7) in an alternating manner and at a uniform distance from each other, preferably two pairs of measuring points (5, 6) arranged in each case in an alternating manner at an angle of 90° to each other.

12. Measuring device according to Claim 1, wherein the force/moment sensor (1) has a torsionally and compressively elastic, cylindrical, central clamping sleeve (7) with a longitudinal axis (8), upon which only the measuring points (6) for the compressive stress, which is dependent upon the axial prestressing force Fᵥ, are arranged, **characterized in that** the measuring points (5) for the torsional stress, which is dependent upon the head frictional moment M_{K}, are arranged on an outer sleeve (17), which coaxially encompasses the central clamping sleeve (7) and which is connected to the central clamping sleeve (7) via means (18, 20, 35) for additional mechanical decoupling of the measuring points (5) for the torsional stress, which is dependent upon the head frictional moment M_{K}, from the compressive stress, which is dependent upon the axial prestressing force Fᵥ, wherein the means (18, 20, 35) are compressively elastic and torsionally stiff.

13. Measuring device according to Claim 12, wherein the central clamping sleeve (7), on its one end face, has a first, preferably cylindrical flange (22), and on the opposite end face, has a second, preferably rectangular flange (23), **characterized in that** for mechanical decoupling of the measuring point (5) for the torsional stress, which is dependent upon the head frictional moment M_{K}, at least one compressively elastic, torsionally stiff circular membrane (18) is arranged between the outer sleeve (17) and the central clamping sleeve (7).

14. Measuring device according to Claim 13, **characterized in that** the outer sleeve (17) is a cylinder which is open at both ends, the two ends of which have an inner flange (24, 25) in each case, wherein a circular membrane (18) is arranged in each case between opposite flanges (22, 24 ; 23, 25) of central clamping sleeve (7) and outer sleeve (17) so that the outer sleeve (17) is supported on the central clamping sleeve (7) in a compressively elastic and torsionally stiff manner.

15. Measuring device according to Claim 13, **characterized in that** the outer sleeve (17) has a cup-like shape with an inner flange (24) which is formed adjacent to the outer edge (33) of its open side, and with a circular baseplate (26) with a hole (27) through which the central clamping sleeve (7) extends, so that on the base side the outer sleeve (17) is supported on the second flange (23) of the central clamping sleeve (7) via the baseplate (26), and on its open side is supported in a compressively elastic and torsionally stiff manner via a circular membrane (18) which is arranged between the opposite flanges (22, 24) of central clamping sleeve (7) and outer sleeve (17).

16. Measuring device according to one of Claims 13 to 15, **characterized in that** the circular membrane (18) has at least one encompassing crease (19).

17. Measuring device according to Claim 12, wherein the central clamping sleeve (7), on its one end face, has a first, preferably cylindrical flange (22), and on the opposite end face, has a second, preferably rectangular flange (23), **characterized in that** for mechanical decoupling of the measuring point (5) for the torsional stress, which is dependent upon the head frictional moment M_{K}, at least one compressively elastic, torsionally stiff bellows or compensator (20) is provided between the outer sleeve (17) and the central clamping sleeve (7).

18. Measuring device according to Claim 17, **characterized in that** the bellows or compensator (20) is arranged between the first flange (22) and the measuring point (5), which is arranged on the outer sleeve (17), for the torsional stress, which is dependent upon the head frictional moment M_{K}.

19. Measuring device according to Claim 17 or 18, **characterized in that** a second compressively elastic, torsionally stiff bellows or compensator (35) is provided, which is preferably arranged between the measuring point (5) for the torsional stress, which is dependent upon the head frictional moment M_{K}, and a circular plate (36), which is connected to the second flange (23).

20. Measuring device according to one of Claims 17 to 19, **characterized in that** the bellows or compensators (20, 35) have at least one encompassing corrugation (21).

21. Measuring device according to one of Claims 12 to 20, **characterized in that** outer sleeve (17), membrane (18), bellows or compensator (20, 35), and/or central clamping sleeve (7) are rigidly or clearance-free interconnectable by means of known connecting techniques, especially by means of screwing and/or welding.

22. Measuring device according to one of Claims 12 to 21, **characterized in that** a mechanical decoupling of the measuring point (5) for the torsional stress, which is dependent upon the head frictional moment M_{K}, from the compressive stress, which is dependent upon the axial prestressing force F_{V}, is carried out by suitable selection of its geometric arrangement on the outer sleeve (17), especially by selection of a length L of the measuring point region (5) on the outer sleeve (17), a radius R of the outer sleeve (17), and a thickness d of the outer sleeve (17) in its region.

23. Measuring device according to Claim 22, **characterized in that** the wall thickness d of the outer sleeve (17) in the region of the measuring point (5) for the torsional stress, which is dependent upon the head frictional moment M_{K}, is less than the rest of the wall thickness D of the outer sleeve (17).

24. Measuring device according to one of Claims 12 to 23, **characterized in that** for increasing the measuring sensitivity of the measuring points (5), which are arranged on the outer sleeve (17), for the torsional stress, which is dependent upon the head frictional moment M_{K}, the outer sleeve (17) additionally has radial holes.

25. Measuring device according to one of Claims 12 to 24, **characterized in that** at least one stress-relief slot (9, 10) and/or at least one stress-relief recess (11, 12) is provided adjacent to the measuring point (5), which is arranged on the outer sleeve (17), for the torsional stress, which is dependent upon the head frictional moment M_{K}.

26. Measuring device according to one of Claims 12 to 25, **characterized in that** the measuring point (6) for determining the compressive stress, which is dependent upon the prestressing force Fᵥ, is arranged on the central clamping sleeve (7), and the measuring point (5), which is mechanically decoupled from it, for the torsional stress, which is dependent upon the head frictional moment M_{K}, is arranged on the outer sleeve (17), in an alternating manner relatively to each other, preferably alternating in pairs, i.e. preferably two pairs of measuring points are arranged in each case in an alternating manner and at an angle of 90° relatively to each other.

27. Measuring device according to Claim 26, **characterized in that** the outer sleeve (17), across the measuring point (6), which is arranged on the central clamping sleeve (7), for the compressive stress, which is dependent upon the prestressing force F_{V}, has a recess for positioning a strain gauge (60) in the measuring point (6) for the compressive stress which is dependent upon the prestressing force F_{V}.

28. Measuring device according to Claim 1,
- wherein the force/moment sensor (1) has a torsionally and compressively elastic, cylindrical, central clamping sleeve (7) with a longitudinal axis (8), upon which only the measuring points (6) for the compressive stress, which is dependent upon the axial prestressing force F_{V}, are arranged, and
- wherein the central clamping sleeve (7), on its one end face, has a first, preferably cylindrical flange (22), and on the opposite end face, has a second, preferably rectangular flange (23),
**characterized in that** two diametrically arranged connecting arms (31, 32) are formed in one piece on the second flange (23), and upon which an outer cylindrical sleeve (17) is arranged so that a torsional stress, which is dependent upon the head frictional moment M_{K}, acts upon the connecting arms (31, 32) via a compressively elastic, torsionally stiff membrane (18) and/or via at least one bellows or compensator (20, 35), and also via the outer sleeve (17), so that on at least one connecting arm (31, 32) in at least one measuring point (5a) with strain gauges (50a), a bending stress, which is dependent upon the head frictional moment M_{K}, is measurable.

29. Measuring device according to Claim 28, **characterized in that** the outer sleeve (17) has an approximately uniform material thickness D in all regions.

30. Measuring device according to one of Claims 1 to 29, wherein the force/moment sensor (1) has a torsionally and compressively elastic, cylindrical, central clamping sleeve (7), which is torsionally elastically supported in a housing, wherein the support of the central clamping sleeve (7) in the housing is carried out on one end face, preferably on the end face upon which the second flange (23) is formed, via two flexible arms (28, 29) which diametrically project from the clamping sleeve (7), **characterized in that** at least one measuring point (4), preferably one in each case, with strain gauges (40) for the bending stress, which is dependent upon the overall tightening torque M_{A}, is provided on the flexible arms (28, 29).

## Revendications

1. Dispositif de mesure pour la détermination du couple de serrage total M_{A}, du moment de friction d'une tête de vis M_{K} et de la force de précontrainte F_{V} d'une connexion à vis (2, 3) serrée et maintenue dans un enregistreur force/couple (1) par la mesure des contraintes résiduelles, en particulier de:
- une contrainte de flexion dépendant du couple de serrage total M_{A} par au moins un point de mesure (4);
- une contrainte de torsion ou une contrainte de flexion dépendant du moment de friction de la tête de vis M_{K} par au moins un point de mesure (5) ou (5a); ainsi que
- une contrainte de compression dépendant de la force de précontrainte axiale Fᵥ par au moins un point de mesure (6);
au moyen de jauges de contrainte (40, 50, 50a, 60), qui sont disposées sur l'enregistreur force/couple (1) de façon à former chacune au moins un des points de mesure (4, 5, 5a, 6) pour déterminer les contraintes dépendant de M_{A}, M_{K} ou F_{V}, dans lequel le dispositif de mesure comprend une douille de serrage élastique en torsion et en compression, **caractérisé en ce que** le point de mesure (5, 5a) pour la contrainte de torsion ou la contrainte de flexion dépendant du moment de friction de la tête de vis M_{K} est séparée par des moyens mécaniques d'une influence de la contrainte de compression dépendant de la force de précontrainte axiale F_{V}.

2. Dispositif de mesure selon la revendication 1, dans lequel l'enregistreur force/couple (1) comprend une douille de serrage centrale cylindrique (7), élastique en torsion et en compression, avec un axe longitudinal (8) sur lequel au moins un point de mesure (5) pour la contrainte de torsion dépendant du moment de friction de la tête de vis M_{K} et au moins un point de mesure (6) pour la contrainte de compression dépendant de la force de précontrainte axiale Fᵥ sont disposés, **caractérisé en ce que** les moyens de séparation du point de mesure (5) pour la contrainte de torsion dépendant du moment de friction de la tête de vis M_{K} suppriment au moins en partie les contraintes de compression dans la douille de serrage (7).

3. Dispositif de mesure selon la revendication 2, **caractérisé en ce que**, pour la séparation du point de mesure (5) pour la contrainte de torsion dépendant du moment de friction de la tête de vis M_{K}, on prévoit au moins une fente de délestage (9) pratiquée au voisinage de celui-ci dans la douille de serrage centrale (7) et s'étendant transversalement, de préférence sensiblement perpendiculairement à son axe longitudinal (8).

4. Dispositif de mesure selon la revendication 2 ou 3, **caractérisé en ce que**, pour la séparation du point de mesure (5) pour la contrainte de torsion dépendant du moment de friction de la tête de vis M_{K}, on prévoit au moins un évidement de délestage (11), essentiellement rectangulaire, pratiqué au voisinage de celui-ci dans la douille de serrage centrale (7) et s'étendant sensiblement parallèlement à son axe longitudinal (8).

5. Dispositif de mesure selon la revendication 3, **caractérisé en ce que** l'on prévoit une deuxième fente de délestage (10) à proximité du point de mesure (5) pour la contrainte de torsion dépendant du moment de friction de la tête de vis M_{K}, qui est sensiblement parallèle à la première fente de délestage (9), dans lequel, comme les grands côtés d'un rectangle, la longueur des fentes de délestage (9, 10) est plus grande que leur écartement, de préférence au moins une fois et demi plus grande, en particulier deux fois plus grande, de telle manière qu'il se forme une partie en forme de nervure (13) entre les fentes de délestage (9, 10).

6. Dispositif de mesure selon la revendication 5, **caractérisé en ce que** la partie en forme de nervure (13) présente une épaisseur de paroi d inférieure à l'épaisseur de paroi D du reste de la douille de serrage centrale (7).

7. Dispositif de mesure selon l'une quelconque des revendications 3 à 6, **caractérisé en ce qu'**au moins une fente de délestage (9) et au moins un évidement de délestage (11), de préférence deux évidements de délestage opposés (11, 12), sont disposés sensiblement perpendiculairement sans contact entre eux, de façon à former entre eux une languette étroite (14), de préférence deux languettes étroites (14, 15), qui relient la partie en forme de nervure (13) au reste de la douille de serrage (7).

8. Dispositif de mesure selon l'une quelconque des revendications 4 à 7, **caractérisé en ce que** les côtés des évidements de délestage (11, 12) tournés vers le point de mesure (5) pour la contrainte de torsion dépendant du moment de friction de la tête de vis M_{K} sont rectilignes.

9. Dispositif de mesure selon l'une quelconque des revendications 4 à 7, **caractérisé en ce que** les côtés des évidements de délestage (11, 12) tournés vers le point de mesure (5) pour la contrainte de torsion dépendant du moment de friction de la tête de vis M_{K} sont élargis de telle manière que la partie en forme de nervure (13) présente un rétrécissement local (16) au moins dans la région du point de mesure (5) pour la contrainte de torsion dépendant du moment de friction de la tête de vis M_{K}.

10. Dispositif de mesure selon la revendication 9, **caractérisé en ce que** l'élargissement latéral des évidements de délestage (11, 12) est formé dans la zone centrale des côtés des évidements de délestage (11, 12) tournés vers le point de mesure (5) pour la contrainte de torsion dépendant du moment de friction de la tête de vis M_{K} et imitent la forme d'un segment de cercle ou d'un triangle ou de toute autre forme géométrique.

11. Dispositif de mesure selon l'une quelconque des revendications 2 à 10, **caractérisé en ce que**, sur la douille de serrage centrale (7), le point de mesure (6) pour la détermination de la contrainte de compression dépendant de la force de précontrainte Fᵥ et le point de mesure (5), mécaniquement séparé de celui-ci, pour la détermination de la contrainte de torsion dépendant du moment de friction de la tête de vis M_{K}, sont disposés en alternance et à distance uniforme l'un de l'autre, de préférence chaque fois deux paires de points de mesure (5, 6) sont disposées en alternance et avec un angle de 90° l'une par rapport à l'autre.

12. Dispositif de mesure selon la revendication 1, dans lequel l'enregistreur force/couple (1) comprend une douille de serrage centrale cylindrique (7), élastique en torsion et en compression, avec un axe longitudinal (8), sur lequel seuls les points de mesure (6) pour la contrainte de compression dépendant de la force de précontrainte axiale F_{V} sont disposés, **caractérisé en ce que** les points de mesure (5) pour la contrainte de torsion dépendant du moment de friction de la tête de vis M_{K} sont disposés sur une douille extérieure (17), qui entoure coaxialement la douille de serrage centrale (7), et qui est reliée à la douille de serrage centrale (7) par des moyens (18, 20, 35) pour la séparation mécanique supplémentaire des points de mesure (5) pour la contrainte de torsion dépendant du moment de friction de la tête de vis M_{K} de la contrainte de compression dépendant de la force de précontrainte axiale F_{V}, dans lequel les moyens (18, 20, 35) sont élastiques en compression et rigides en torsion.

13. Dispositif de mesure selon la revendication 12, dans lequel la douille de serrage centrale (7) comprend sur une première extrémité frontale une première bride (22), de préférence cylindrique, et sur son extrémité frontale opposée une deuxième bride (23), de préférence rectangulaire, **caractérisé en ce qu'**au moins une membrane circulaire (18), élastique en compression et rigide en torsion, est disposée entre la douille extérieure (17) et la douille de serrage centrale (7) pour séparer mécaniquement le point de mesure (5) pour la contrainte de torsion dépendant du moment de friction de la tête de vis M_{K}.

14. Dispositif de mesure selon la revendication 13, **caractérisé en ce que** la douille extérieure (17) est un cylindre ouvert sur les deux côtés, dont les deux extrémités présentent chacune bride intérieure (24, 25), dans lequel une membrane circulaire (18) est chaque fois disposée entre des brides opposées (22, 24; 23, 25) de la bride de serrage centrale (7) et de la bride extérieure (17), de telle manière que la douille extérieure (17) soit maintenue de manière élastique en compression et rigide en torsion sur la douille de serrage centrale (7).

15. Dispositif de mesure selon la revendication 13, **caractérisé en ce que** la douille extérieure (17) présente une forme de pot avec une bride intérieure (24) formée à proximité du bord extérieur (33) de son côté ouvert et une plaque de fond circulaire (26) avec un trou (27) à travers lequel la douille de serrage centrale (7) s'étend, de telle manière que la douille extérieure (17) soit maintenue du côté du fond par la plaque de fond (26) sur la deuxième bride (23) de la douille de serrage centrale (7) et sur son coté ouvert, de manière élastique en compression et rigide en torsion, par une membrane circulaire (18) disposée entre les brides opposés (22, 24) de la douille de serrage centrale (7) et de la douille extérieure (17).

16. Dispositif de mesure selon l'une quelconque des revendications 13 à 15, **caractérisé en ce que** la membrane circulaire (18) présente au moins une moulure périphérique (19).

17. Dispositif de mesure selon la revendication 12, dans lequel la douille de serrage centrale (7) présente sur sa première extrémité frontale une première bride (22), de préférence cylindrique, et sur son extrémité opposée une deuxième bride (23), de préférence rectangulaire, **caractérisé en ce que** l'on prévoit au moins un soufflet ou un compensateur (20), élastique en compression et rigide en torsion, entre la douille extérieure (17) et la douille de serrage centrale (7), pour séparer mécaniquement le point de mesure (5) pour la contrainte de torsion dépendant du moment de friction de la tête de vis M_{K}.

18. Dispositif de mesure selon la revendication 17, **caractérisé en ce que** le soufflet ou le compensateur (20) est disposé entre la première bride (22) et le point de mesure (5) disposé sur la douille extérieure (17) pour la contrainte de torsion dépendant du moment de friction de la tête de vis M_{K}.

19. Dispositif de mesure selon la revendication 17 ou 18, **caractérisé en ce que** l'on prévoit un deuxième soufflet ou compensateur (35), élastique en compression et rigide en torsion, qui est disposé de préférence entre le point de mesure (5) pour la contrainte de torsion dépendant du moment de friction de la tête de vis M_{K} et une plaque circulaire (36) assemblée à la deuxième bride (23).

20. Dispositif de mesure selon l'une quelconque des revendications 17 à 19, **caractérisé en ce que** les soufflets ou les compensateurs (20, 35) présentent au moins une ondulation périphérique (21).

21. Dispositif de mesure selon l'une quelconque des revendications 12 à 20, **caractérisé en ce que** la douille extérieure (17), la membrane (18), le soufflet ou compensateur (20, 35) et/ou la douille de serrage centrale (7) peuvent être assemblés l'un à l'autre de manière rigide ou sans jeu, par des moyens d'assemblage connus, en particulier par vissage et/ou soudage.

22. Dispositif de mesure selon l'une quelconque des revendications 12 à 21, **caractérisé en ce qu'**une séparation mécanique du point de mesure (5) pour la contrainte de torsion dépendant du moment de friction de la tête de vis M_{K} de la contrainte de compression dépendant de la force de précontrainte axiale F_{V} est effectuée par un choix approprié de leur disposition géométrique sur la douille extérieure (17), en particulier par le choix d'une longueur L de la zone du point de mesure (5) sur la douille extérieure (17), d'un rayon R de la douille extérieure (17), et d'une épaisseur d de la douille extérieure (17) dans sa zone.

23. Dispositif de mesure selon la revendication 22, **caractérisé en ce que** l'épaisseur de paroi d de la douille extérieure (17) dans la zone du point de mesure (5) pour la contrainte de torsion dépendant du moment de friction de la tête de vis M_{K} est inférieure à l'épaisseur de paroi D du reste de la douille extérieure (17).

24. Dispositif de mesure selon l'une quelconque des revendications 12 à 23, **caractérisé en ce que** la douille extérieure (17) présente en plus des alésages radiaux pour augmenter la sensibilité de mesure des points de mesure (5) disposés sur la douille extérieure (17) pour la contrainte de torsion dépendant du moment de friction de la tête de vis M_{K}.

25. Dispositif selon l'une quelconque des revendications 12 à 24, **caractérisé en ce que** l'on prévoit au moins une fente de délestage (9, 10) et/ou au moins un évidement de délestage (11, 12) à proximité du point de mesure (5) disposé sur la douille extérieure (17) pour la contrainte de torsion dépendant du moment de friction de la tête de vis M_{K}.

26. Dispositif de mesure selon l'une quelconque des revendications 12 à 25, **caractérisé en ce que** le point de mesure (6) pour la détermination de la contrainte de compression dépendant de la force de précontrainte F_{V} sur la douille de serrage centrale (7) et le point de mesure (5), mécaniquement séparé de celui-ci, pour la contrainte de torsion dépendant du moment de friction de la tête de vis M_{K} sur la douille extérieure (17), sont disposés en alternance l'un par rapport à l'autre, de préférence en alternance par paires, c'est-à-dire que de préférence deux paires de points de mesure sont chaque fois disposées en alternance et avec un angle de 90° l'une par rapport à l'autre.

27. Dispositif de mesure selon la revendication 26, **caractérisé en ce que** la douille extérieure (17) présente, au-dessus du point de mesure (6) disposé sur la douille de serrage centrale (7) pour la contrainte de compression dépendant de la force de précontrainte Fᵥ, un évidement permettant de placer une jauge de contrainte (60) dans le point de mesure (6) pour la contrainte de compression dépendant de la force de précontrainte F_{V}.

28. Dispositif de mesure selon la revendication 1,
- dans lequel l'enregistreur force/couple (1) comprend une douille de serrage centrale cylindrique (7), élastique en torsion et en compression, avec un axe longitudinal (8), sur lequel seuls les points de mesure (6) pour la contrainte de compression dépendant de la force de précontrainte axiale F_{V} sont disposés, et
- dans lequel la douille de serrage centrale (7) comporte sur sa première extrémité frontale une première bride (22), de préférence cylindrique, et sur son extrémité frontale opposée une deuxième bride (23), de préférence rectangulaire,
**caractérisé en ce que** la deuxième bride (23) comporte deux bras de liaison diamétralement opposés (31, 32), formés d'une seule pièce, sur lesquels une douille extérieure cylindrique (17) est disposée de telle manière qu'une contrainte de torsion dépendant du moment de friction de la tête de vis M_{K} agisse sur les bras de liaison (31, 32), par l'intermédiaire d'une membrane (18) élastique en compression et rigide en torsion, et/ou d'au moins un soufflet ou d'un compensateur (20, 35) ainsi que par l'intermédiaire de la douille extérieure (17), de telle manière qu'une contrainte de flexion dépendant du moment de friction de la tête de vis M_{K} puisse être mesurée sur au moins un bras de liaison (31, 32) en au moins un point de mesure (5a) avec des jauges de contrainte (50a).

29. Dispositif de mesure selon la revendication 28, **caractérisé en ce que** la douille extérieure (17) présente une épaisseur de matière D sensiblement uniforme dans toutes les zones.

30. Dispositif de mesure selon l'une quelconque des revendications 1 à 29, dans lequel l'enregistreur force/couple (1) comprend une douille de serrage centrale cylindrique (7), élastique en torsion et en compression, qui est appuyée de manière élastique en rotation dans un boîtier, dans lequel l'appui de la douille de serrage centrale (7) dans le boîtier est réalisé sur une extrémité frontale, de préférence sur l'extrémité frontale sur laquelle la deuxième bride (23) est formée, à l'aide de deux bras élastiques en flexion (28, 29) sortant diamétralement de la douille de serrage (7), **caractérisé en ce que** l'on prévoit sur les bras élastiques en flexion (28, 29) au moins un, de préférence chaque fois un, point de mesure (4) avec des jauges de contrainte (40) pour la contrainte de flexion dépendant du couple de serrage total M_{A}.
